# EUROPEAN PATENT SPECIFICATION

(11) **EP 4 400 402 B1**
(45) Date of publication and mention of the grant of the patent: **24.12.2025**
(21) Application number: 24166966.2
(22) Date of filing: 31.08.2022
(51) Int. Cl.: B62M 6/55, B62M 11/06, B62M 25/08, B62J 43/13, B62J 43/28, B62J 45/411, B62K 19/30, B62K 25/32, B62M 9/16

(54) **POWERTRAIN FOR ELECTRIC BICYCLE**
ANTRIEBSSTRANG FÜR EIN ELEKTROFAHRRAD
GROUPE MOTOPROPULSEUR POUR BICYCLETTE ÉLECTRIQUE

(30) Priority: 31.08.2021 US 202163238879 P
(43) Date of publication of application: 17.07.2024
(62) Divisional of application: 22769738.0
(73) Proprietor: BRP-Rotax GmbH & Co. KG, 4623 Gunskirchen (AT)
(72) Inventor: MUELLER, Tommy, 80995 Muenchen (DE); HINTERBERGER, Walter, 4710 Grieskirchen (AT); SANCHEZ, Pablo, 80796 Muenchen (DE)
(74) Representative: Murgitroyd & Company

(56) References cited:
- EP-A2- 2 881 315
- WO-A1-2015/081931
- WO-A1-2020/221491
- DE-A1- 102011 120 675
- DE-A1- 102021 001 222

## Description

### TECHNICAL FIELD

The present technology relates to powertrains for bicycles having an electric motor used to assist propulsion.

### BACKGROUND

Following improvements in battery and electric motor technologies, electric bicycles have become an increasingly popular mode of short distance transportation. Electric bicycles provide the convenient aspects of motor-less bicycles while reducing the effort required by the cyclist to propel the bicycle.

There are different types of electric bicycles. One type of electric bicycle is power-on-demand bicycles in which the electric motor is controlled by a "throttle" and can propel the bicycle without the cyclist having to pedal. In a power-on-demand bicycle, the cyclist can also pedal without any assistance from the motor, and can pedal while actuating the throttle to provide motorized propulsion assistance. Another type of electric bicycle is pedal-assist bicycles in which an electric motor assists the cyclist's pedal-power without the need to actuate a "throttle". Pedal-assist bicycles are also known as pedelecs (from pedal electric cycles) or EPACs (Electronically Power Assisted Cycles). For purposes of the present application, the term pedelec will be used. In a pedelec, motorized propulsion assistance is only provided when the cyclist is pedalling and stops when the bicycle reaches a certain speed, such as 25 km/h. Another type of electric bicycle combines the features of power-on-demand bicycles and pedelecs. In other words, a pedelec with a "throttle" that allows the electric motor to propel the bicycle without having to pedal if desired.

In some pedelecs, a derailleur is used to provide a variable-ratio gearing system. The derailleur system is efficient and lightweight. However, the system is exposed to the elements which could affect its durability, and requires regular maintenance. Other pedelecs use gearbox transmission associated with the pedelec's crank. Such gearboxes are heavier than derailleur system, but are very durable, low-maintenance, and provide smooth transition from one gear to another.

In many electric bicycles, the electric motor is a hub motor provided at the rear wheel. This increases the mass of the rear wheel assembly. In bicycles having a rear suspension, such as in some mountain bicycles, such an increase in the unsprung mass is not desirable. As such, using this type of electric motor in an electric bicycle having a rear suspension can be disadvantageous.

WO 2015/081931 discloses a speed-changing mechanism for a drive unit for vehicles where a main drive shaft is driven by muscle power. An output shaft and a drive shaft and another drive shaft are provided, wherein the shafts are arranged parallel to one another and bear toothed wheels. A first fixed set of gear wheels is provided, consisting of a large wheel fastened on the main drive shaft and a pinion fastened on the one drive shaft and another pinion fastened on the other drive shaft, which two pinions are driven simultaneously by the large wheel. At least one further set of gear wheels is provided, consisting of in each case one fixed wheel fastened on the output shaft and a pair of loose wheels. One loose wheel is arranged on the one drive shaft and the other loose wheel is arranged on the other drive shaft. The fixed wheel of the at least one further set of gear wheels, which fixed wheel is connected to the output shaft, always meshes simultaneously with the one loose wheel of the one drive shaft and with the other loose wheel of the other drive shaft. One loose wheel is fixedly connectable to the one drive shaft at least in one direction of rotation by means of a shift device and the other loose wheel is fixedly connectable to the other drive shaft at least in one direction of rotation by means of a shift device.

EP2881315 discloses a transmission comprising: a driving shaft suitable for being positioned on the axis of a pedals and wheel assembly, an intermediate shaft comprising a plurality of first transmission units rotated by a gear wheel fixed on the driving shaft, a user shaft comprising a respective plurality of second transmission units and at least one output of the transmission, wherein each second transmission unit is rotated by a respective first transmission unit. The transmission also comprises a rigid supporting element structured for forming at least one fixed support for at least the intermediate shaft and a measuring element comprising a first portion with controlled deformation forming at least one mobile support for the intermediate shaft wherein the intermediate shaft can rotate relative to the mobile support and a second supporting portion interposed between the first portion and the rigid supporting element.

EP 2 881 315 A2 discloses the following features of claim 1, a powertrain for an electric bicycle comprising:an electric motor; a motor gear operatively connected to and driven by the electric motor; a crankshaft adapted for connecting to crank arms of the bicycle; an input shaft having a first end portion and a second end portion, the second end portion being operatively connected to and driven by the crankshaft; an input gear connected to the first end portion of the input shaft, the input gear engaging and being driven by the motor gear, the input gear driving the input shaft; at least one first gear mounted to the input shaft; an output shaft disposed parallel to the input shaft; at least one second gear mounted to the output shaft, the at least one second gear being driven by the at least one first gear; a drive sprocket connected to and driven by the output shaft; and a torque sensor for sensing torque applied to the input shaft, the electric motor being controlled based at least in part on torque sensed by the torque sensor.

There remains a desire for an improved powertrain for an electric bicycle.

### SUMMARY

According to one aspect of the present technology, there is provided a powertrain for an electric bicycle according to claim 1.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

It must be noted that, as used in this specification and the appended claims, the singular form "a", "an" and "the" include plural referents unless the context clearly dictates otherwise.

As used herein, the term "about" in the context of a given value or range refers to a value or range that is within 20%, preferably within 10%, and more preferably within 5% of the given value or range.

As used herein, the term "and/or" is to be taken as specific disclosure of each of the two specified features or components with or without the other. For example "A and/or B" is to be taken as specific disclosure of each of (i) A, (ii) B and (iii) A and B, just as if each is set out individually herein.

For purposes of the present application, terms related to spatial orientation when referring to a vehicle and components in relation to the bicycle, with the bicycle steered straight-ahead and being at rest on flat, level ground.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a right side elevation view of a pedelec according to the present technology;
Figure 2 is a perspective view, taken from a front, right side, of the pedelec of Fig. 1 with a front wheel and pedals removed;
Figure 3 is a left side elevation view of the pedelec of Fig. 1 with the front wheel and pedals removed;
Figure 4 is a right side elevation view of the pedelec of Fig. 1 with a right side of a down tube of the frame removed to show a battery pack, with the front wheel and pedals removed;
Figure 5 is a right side elevation view of the pedelec of Fig. 1 with front and rear suspensions fully compressed, with the pedals removed;
Figure 6 is a longitudinal cross-section of a frame, the battery pack and a motor and transmission assembly of the pedelec of Fig. 1;
Figure 7 is a perspective view taken from a rear, left side of the battery pack of Fig. 6;
Figure 8 is schematic representation of electric and electronic components of the pedelec of Fig. 1;
Figure 9 is a right side elevation view of a chain stay, a chain, sprockets and chain tensioner of the pedelec of Fig. 1;
Figure 10 is a left side elevation view of the components of Fig. 9;
Figure 11 is a cross-sectional view of the components of Fig. 9 taken through line 11-11 of Fig. 9;
Figure 12 is a top view of a shifter of the pedelec of Fig. 1;
Figure 13 is a perspective view, taken from a front, right side, of a powertrain of the pedelec of Fig. 1;
Figure 14 is a perspective view, taken from a front, right side, of a chain sprocket, crank arms, a transmission and a motor of the pedelec of Fig. 1 with a housing removed;
Figure 15 is a perspective view, taken from a front, left side, of the components of Fig. 14;
Figure 16 is a perspective view, taken from a bottom, rear, left side, of the chain sprocket, the transmission and the motor of Fig. 14 with the housing removed;
Figure 17 is a right side elevation view of the components of Fig. 16;
Figure 18 is a left side elevation view of the components of Fig. 16;
Figure 19 is a perspective view taken from a bottom, rear, left side, of a crankshaft and an input shaft assembly of the transmission and of the motor of Fig. 14;
Figure 20 is a right side elevation view of the components of Fig. 19, with a right crank arm removed;
Figure 21 is an exploded perspective view, taken from a front, right side, of the motor of Fig. 14 and its associated cycloidal drive and motor gear;
Figure 22 is a perspective view, taken from a front, left side, of the crankshaft and the input shaft assembly of the transmission of Fig. 14;
Figure 23 is a perspective view, taken from a front, right side of the input shaft assembly of Fig. 22;
Figure 24 is a perspective view, taken from a front, left side, of the crankshaft and the input shaft of the input shaft assembly of Fig. 22;
Figure 25 is a perspective view, taken from a front, left side, of a gear of the input shaft assembly of Fig. 22;
Figure 26 is a perspective view, taken from a front, left side, of a countershaft assembly and shift assemblies of the transmission of Fig. 14;
Figure 27 is a perspective view, taken from a front, right side, of the chain sprocket and an output shaft assembly of the transmission of Fig. 14;
Figure 28 is a perspective view, taken from a front, right side, of the components of Fig. 27, with two of the gears removed;
Figure 29 is a side elevation view of a gear of the output shaft assembly of Fig. 27;
Figure 30 is a cross-sectional view of the components of Fig. 17 with the housing and the crank arms, taken through line 30-30 of Fig. 17;
Figure 31 is a cross-sectional view of the components of Fig. 17 with the housing, taken through line 31-31 of Fig. 17;
Figure 32 is a cross-sectional view of the components of Fig. 17 with the housing, taken through line 32-32 of Fig. 17;
Figure 33 is a perspective view, taken from a front, right side, of a partial cross-section of the countershaft assembly and the shift assemblies of Fig. 26;
Figure 34 is a perspective view of a portion of the countershaft assembly of Fig. 26;
Figure 35 is a front elevation view of a portion of a left shift assembly of Fig. 26;
Figure 36 is a perspective view, taken from a front, right side, of the portion of the left shift assembly of Fig. 35 with a cam removed;
Figure 37 is a perspective view, taken from a front, right side, of a partial cross-section of the portion of the left shift assembly of Fig. 35;
Figure 38 is a lateral cross-section of a cam and a shift pawl of the left shift assembly of Fig. 35, with the shift pawl being disengaged;
Figure 39 is a lateral cross-section of the cam and shift pawl of Fig. 38, with the shift pawl being engaged;
Figure 40 is a cross-sectional view of the countershaft assembly and the left shift assembly taken through line 40-40 of Fig. 32;
Figure 41 is a close-up of the cross-sectional view of Fig. 40, with one shift pawl shown engaged with a gear and one shift pawl shown disengaged from the gear;
Figure 42 is a side elevation of the cam and shift pawls of the left shift assembly of Fig. 35;
Figure 43 is a perspective view of one of the shift pawls of Fig. 42;
Figure 44 is another perspective view of the shift pawl of Fig. 43;
Figure 45 is a lateral cross-section of the countershaft assembly and the shift assemblies of Fig. 26 in a configuration corresponding to a first gear of the transmission;
Figure 46 is a lateral cross-section of the countershaft assembly and the shift assemblies of Fig. 26 in a configuration corresponding to a third gear of the transmission;
Figure 47 is a lateral cross-section of the countershaft assembly and the shift assemblies of Fig. 26 in a configuration corresponding to a fourth gear of the transmission;
Figure 48 is a lateral cross-section of the countershaft assembly and the shift assemblies of Fig. 26 in a configuration corresponding to a ninth gear of the transmission;
Figure 49 is a lateral cross-section of an alternative embodiment of the countershaft assembly and alternative embodiments of the shift assemblies of Fig. 26 in a configuration corresponding to a seventh gear of the transmission, with the electric shift motors omitted;
Figure 50 is a perspective view of a portion of the countershaft assembly of Fig. 49;
Figure 51 is a lateral cross-section of a cam and a shift pawl the left shift assembly of Fig. 49, with the shift pawl being disengaged;
Figure 52 is a lateral cross-section of the cam and shift pawl of Fig. 51, with the shift pawl being engaged;
Figure 53 a close-up, cross-sectional view of the countershaft assembly and the left shift assembly of Fig. 49, with one shift pawl shown engaged with a gear, one shift pawl shown partially engaged with the gear, and one shift pawl shown disengaged from the gear; and
Figure 54 is a perspective view of one of the shift pawls of Fig. 53.

### DETAILED DESCRIPTION

The present technology will be described with reference to a pedelec 10. It is contemplated that aspects of the present technology could be applied to other types of electric bicycles, such as power-on-demand bicycles or combination pedelec/power-on-demand bicycles. It is also contemplated that certain aspects of the present technology could be used in other types of bicycles, including bicycles that do not have an electric motor.

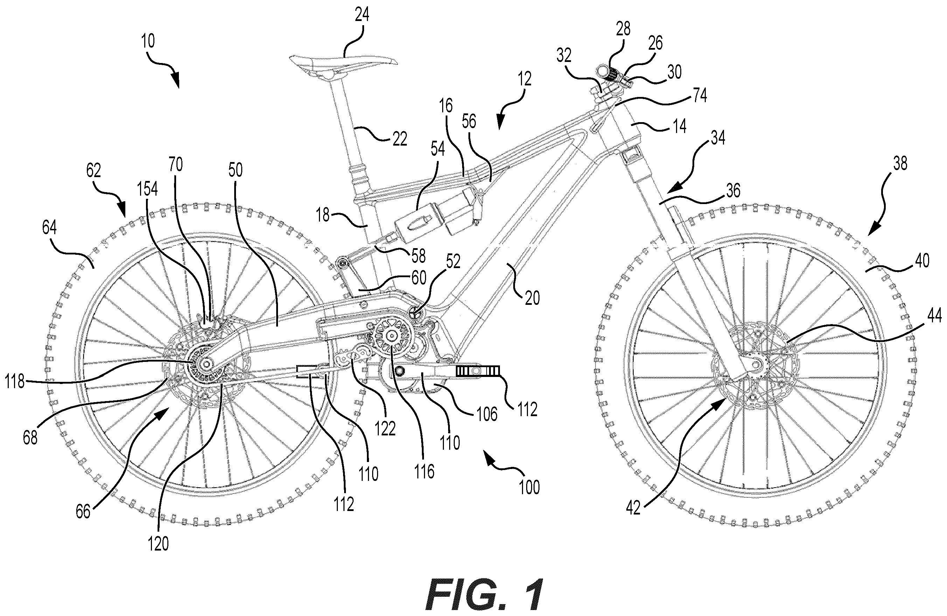

With refence to Figs. 1 to 5, the pedelec 10 has a frame 12. The frame 12 has a head tube 14, a top tube16, a seat tube 18, and a down tube 20. As can be seen, the top tube 16, the seat tube 18 and the down tube 20 form a generally triangular shape. The seat tube 18 receives a seat post 22 therein. A saddle 24 is connected to a top of the seat post 22. The seat post 22 is selectively slidable in the in the seat tube 18 to adjust a height of the saddle 24. A clamp (not shown) is used to fix the seat post 22 in the desired position.

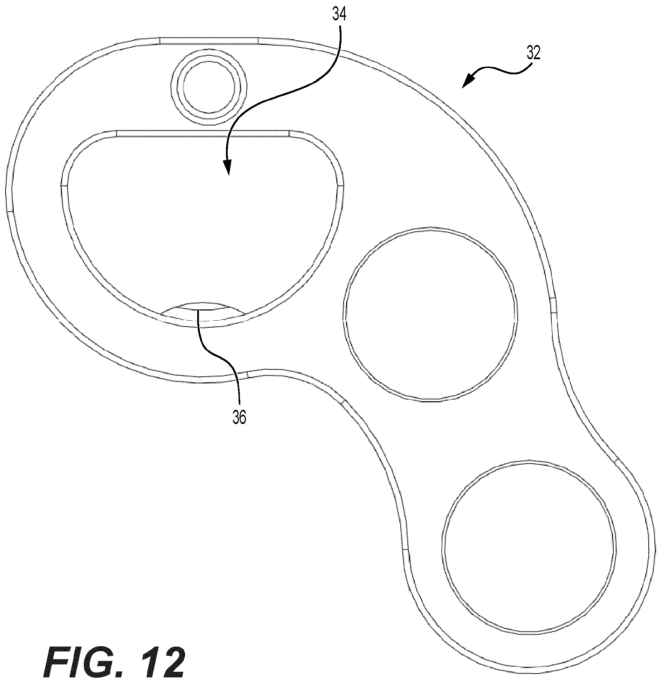

A handlebar 26 is pivotally connected to the head tube 14. The handlebar 26 has left and right hand grips 28. Left and right brake levers 30 are mounted to the handlebar 26 in proximity to the left and right hand grips 28 respectively in front of the handlebar 26. A shifter 32 is pivotally connected to the handlebar 26 in proximity to the right hand grip 28. The shifter 32 extends partially rearward of the right hand grip 28. As such, the shifter 32 can be actuated by a thumb of a right hand of a cyclist riding the pedelec 10. As can be seen in Fig. 12, the shifter 32 defines an aperture 34 in which a tapered tongue 36 protrudes. The aperture 34 and tongue 36 are shaped and sized to allow the shifter 32 to be used as a bottle opener. It is contemplated that the aperture 34 and the tongue 36 could be omitted. It is contemplated that shifter 32 could alternatively be provided in proximity to the left hand grip 28. In the present embodiment, the shifter 32 is used to upshift and downshift, but it is contemplated that the pedelec 10 could have one shifter to upshift and one shifter to downshift. These two shifters could be provided in proximity to the same hand grip 28 or there could be one shifter provided in proximity to each hand grip 28. It is also contemplated that in some embodiments, the shifter 32 could be replaced by a different type of shifter, such as a twistgrip. It is contemplated that in some embodiments, the shifter 32 could be omitted.

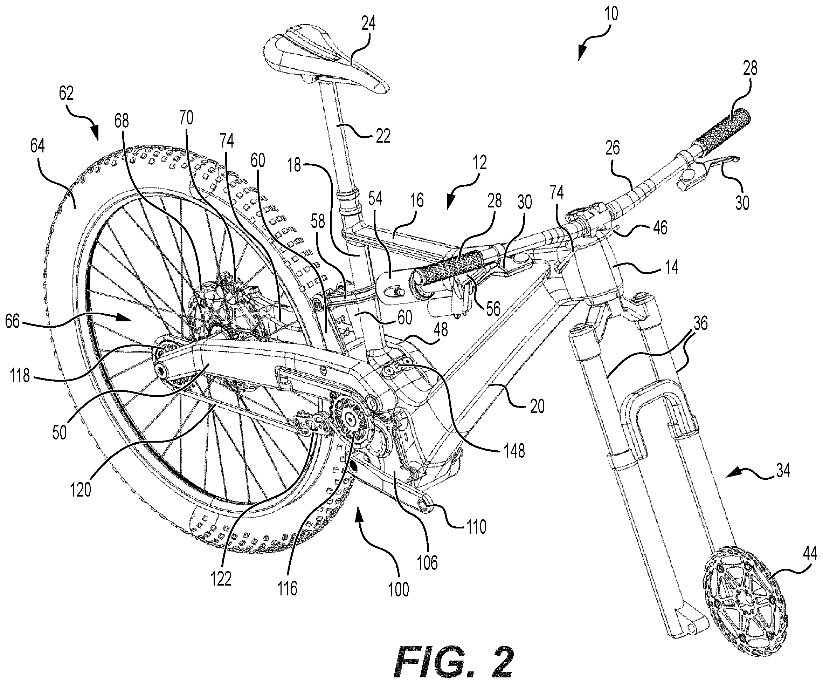

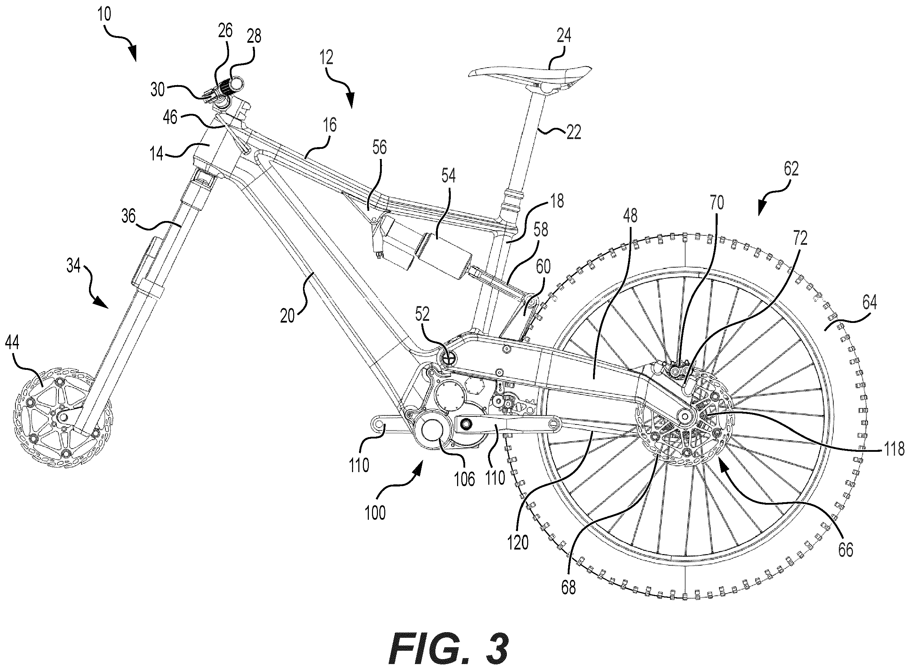

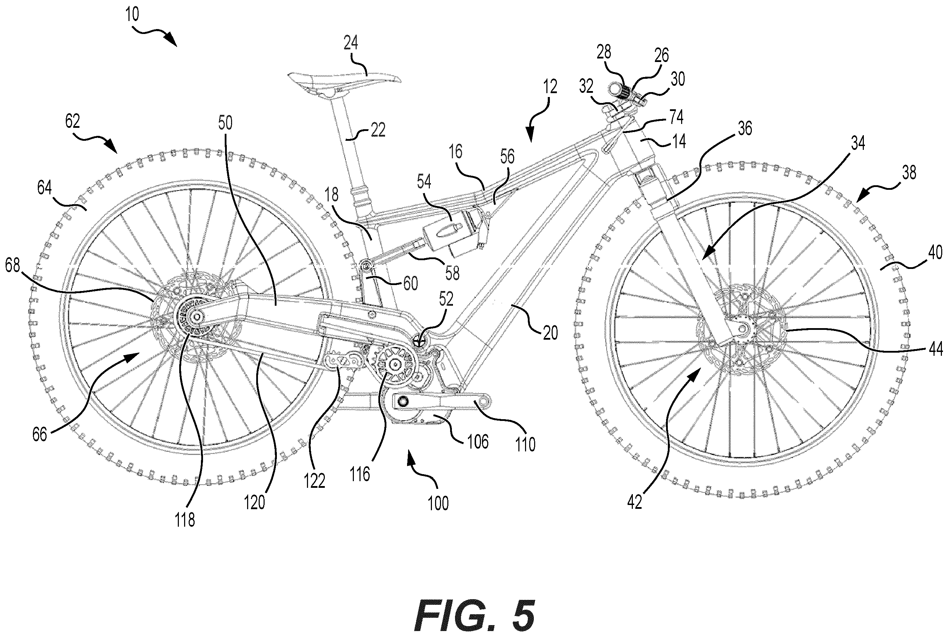

Returning to Figs. 1 to 5, a fork 34 is connected to the handlebar 26 below the head tube 14. The fork 34 includes a pair of front shock absorbers 36. It is contemplated that in some embodiments, the front shock absorbers 36 could be omitted. A front wheel 38 is rotationally connected to the fork 34. The fork 34 and the front wheel 38 pivot with the handlebar 26 to steer the pedelec 10. The front wheel 38 has a threaded tire 40 of the type typically found on mountain bikes, but other types of tires are contemplated. As can be seen by comparing Figs. 1 and 5, the front shock absorbers 36 allow the front wheel 38 to travel up and down, such as when going over bumpy terrain. A front brake assembly 42 is mounted to the front wheel 38. The front brake assembly 42 includes a brake disc 44 and a brake caliper (not shown). The brake caliper is actuated by a push-pull cable 46 (partially illustrated in Figs. 2 and 3) connected to the left brake lever 30. The cable 46 passes through the frame 12. It is contemplated that instead of being a disc brake assembly, the front brake assembly 42 could be another type of brake assembly, such as a rim brake assembly or a drum brake assembly for example. It is also contemplated that instead of being mechanically actuated, the disc brake assembly 42 could be hydraulically or electrically actuated for example.

Left and right chain stays 48, 50 are pivotally connected to the left and right sides of the frame 12 about a pivot axis 52. The left and right chain stays 48 and 50 have similar outlines when viewed from a left or right side of the pedelec 10, however they each have some different features designed to accommodate certain components of the pedelec 10 as will be described in more detail below. A rear shock absorber 54 is pivotally connected between tabs 56 extending downward from the top tube 16. A yoke 58 is connected to the rear shock absorber 54. The seat tube 18 is disposed between the legs of the yoke 58. The ends of the legs of the yoke 58 are connected to left and right arms 60. The lower ends of the left and right arms 60 are connected to the inner sides of the left and right chain stays 50 respectively. It is contemplated that in some embodiments, the rear shock absorber 54, the yoke 58 and the arms 60 could be omitted. In such embodiment, the chain stays 48, 50 are fixedly connected to the frame 12 and the frame 12 includes left and right seat stays connected between the upper end of the seat tube 18 and the rear ends of the chain stays 48, 50.

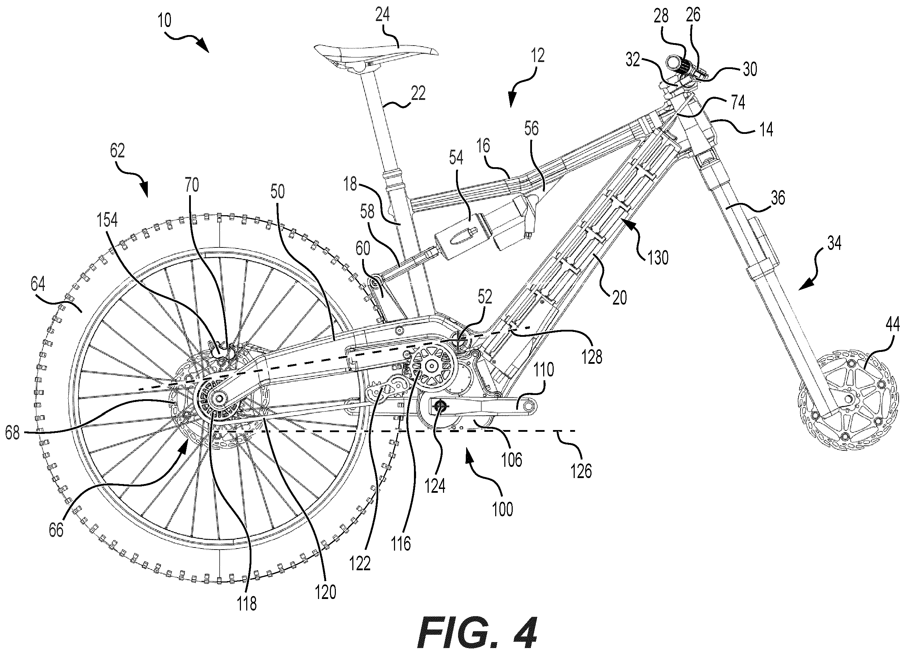

A rear wheel 62 is disposed between the chain stays 48, 50 and is rotationally connected thereto. The rear wheel 62 has a threaded tire 64 of the type typically found on mountain bikes, but other types of tires are contemplated. As can be seen by comparing Figs. 1 and 5, the rear shock absorbers 54 allow the rear wheel 62 to travel up and down by pivoting with the chain stays 48, 50 about the pivot axis 52, such as when going over bumpy terrain. A rear brake assembly 66 is mounted to the rear wheel 62. The rear brake assembly 66 includes a brake disc 68 and a brake caliper 70. The brake caliper 70 is mounted to a bracket 72 defined by the left chain stay 48 as shown in Fig. 3. The brake caliper 70 is actuated by a push-pull cable 74 connected to the right brake lever 30. From the right brake lever 30, the cable 74 passes through the down tube 20 of the frame 12 as shown in Fig. 4 and then passes along the inner side of the left chain stay 48 as shown in Fig. 2 and then connects to the caliper 70. It is contemplated that instead of being a disc brake assembly, the rear brake assembly 66 could be another type of brake assembly, such as a rim brake assembly or a drum brake assembly for example. It is also contemplated that instead of being mechanically actuated, the disc brake assembly 66 could be hydraulically or electrically actuated for example.

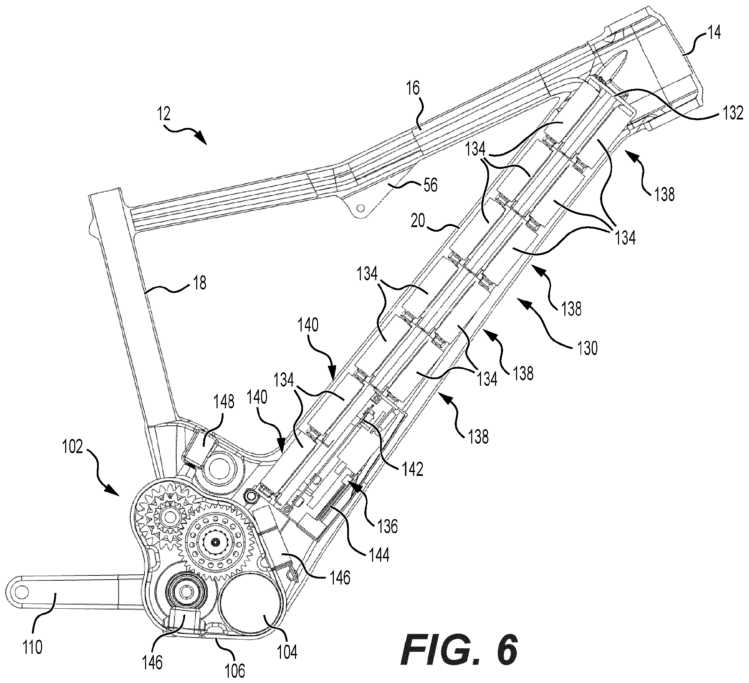

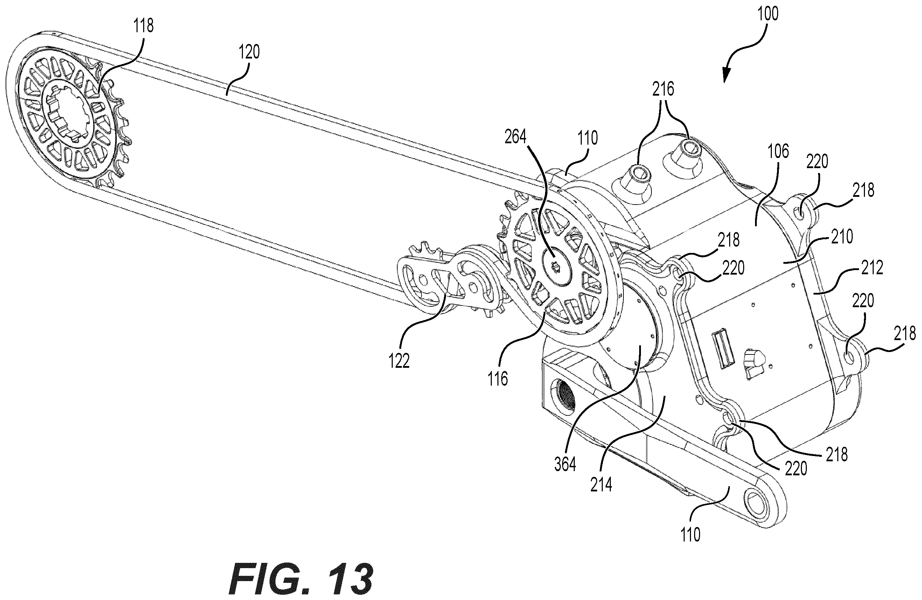

The pedelec 10 is propelled by a powertrain 100. With reference to Fig. 6, the powertrain 100 includes a transmission 102 and an electric motor 104. The transmission 102 has a housing 106. The housing 106 is connected to the lower ends of the seat tube 18 and the down tube 20 of the frame 12 as can be seen in Fig. 6. The electric motor 104 is disposed in the housing 106 and selectively drives the transmission 102. A crankshaft 108 extends through the housing 106 and is operatively connected to the transmission 102 to selectively drive the transmission 102. Crank arms 110 are connected to the ends of the crankshaft 108. Pedals 112 (Fig. 1) are rotationally connected to the ends of the crank arms 110. The transmission 102 has an output shaft 114 extending through a right side of the housing 106. With reference to Fig. 13, a drive sprocket 116 is connected to and driven by the right end of the output shaft 114. A driven sprocket 118 is rotationally fixed to the rear wheel 62. A flexible drive member 120 wraps around and engages the drive and driven sprockets 116, 118 to transmit torque from the drive sprocket 116 to the driven sprocket 118. In the present embodiment, the flexible drive member 120 is a chain 120 and the drive and driven sprockets 116, 118 are chain sprockets. It is contemplated that in other embodiments, the flexible drive member 120 could be a toothed drive belt and the sprockets 116, 118 could be belt sprockets. A chain tensioner 122 is provided near the drive sprocket 116. The powertrain 100 will be described in more detail below.

With reference to Fig. 4, it can be seen that the lowest point of the drive sprocket 116 is vertically higher than a crankshaft axis 124 of the crankshaft 108. Furthermore, the lowest point of the housing 106 is vertically lower than the drive sprocket 116, the driven sprocket 118, the chain 120 and the chain tensioner 122 as can be seen from horizontal line 126 passing through the lowest point of the housing 106. As such, the housing 106 helps to shield these components from impact with rugged terrain or debris on the terrain. As can also be seen in Fig. 4, the pivot axis 52 of the chain stays 48, 50 is in proximity to a line 128 that is tangential to the drive and driven sprockets 116, 118 and containing the upper portion of the chain 120 (i.e. the portion of the chain 120 extending between the top of the sprockets 116, 118). In the present embodiment, the pivot axis 52 is slightly below the line 128. In some embodiments, the pivot axis 52 is less than 5 centimeters above or below the line 128. In other embodiments, the pivot axis 52 is less than 2 centimeters above or below the line 128. In other embodiments, the pivot axis 52 is less than 1 centimeter above or below the line 128. In other embodiments, the pivot axis 52 is in alignment with the line 128. By having the pivot axis 52 in proximity to or in alignment with the line 128, there is little or no moment about the pivot axis 52 when torque is applied to the drive sprocket 116. As a result, there is little or no pivoting of the chain stays 48, 50, and therefore of the wheel 62, about the pivot axis 52 resulting from torque being applied to the drive sprocket 116.

With reference to Figs 4, 6 and 7, the electric motor 104 is electrically connected to a battery pack 130. The battery pack 130 is disposed in the down tube 20 of the frame 12 and connected to the frame 12. The battery pack 130 is inserted through the bottom of the down tube 120 before the housing 106 is mounted to the frame 12. The battery pack 130 includes a battery tray 132, thirty-six batteries 134 (only some of which are labeled for simplicity), and power and control electronics 136. The battery tray 132 holds the batteries 134 in five sets 138 of six batteries 134 disposed in a circle and two sets 140 of three batteries 134 disposed in an arc. The power and control electronics 136 are disposed below the sets 140 at a lower end of the battery pack 130. By arranging the batteries 134 of the sets 138 in a circle, a passage is formed in the center of the battery pack 130 permitting the passage of electric wiring therein. Three groups of batteries 134 are connected in parallel, which each group containing twelve batteries 134 connected in series. The batteries 134 are lithium-ion batteries such as Samsung^{™} 40T batteries. It is contemplated that the batteries 134 could be of a different type, could be electrically connected differently, could be disposed in the frame differently and/or that there could be a different number of batteries 134.

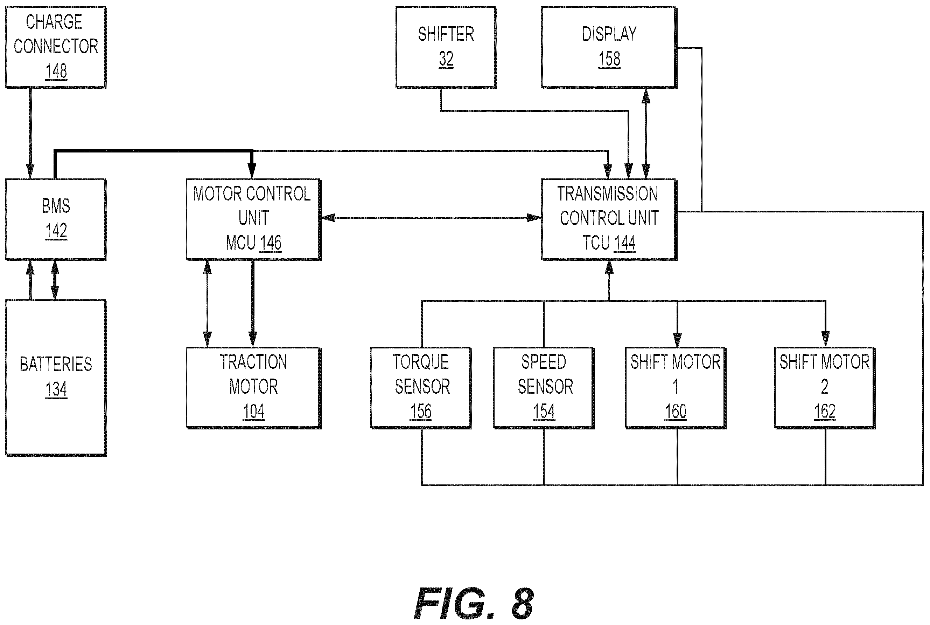

The power and control electronics 136 include a battery management system (BMS) 142 for controlling the flow of power to and from the batteries 134, a transmission control unit (TCU) 144, including a torque sensor evaluation board, for controlling operation of the transmission 102, and a motor control unit (MCU) 146 for controlling operation of the electric motor 104. As can be seen in Fig. 8, the BMS 142, the TCU 144 and the MCU 146 are electrically connected to each other to allow the exchange of power and electronic signals therebetween. It is also contemplated that the power and control electronics 136 could also include, but not limited to, a micro-controller allowing for wireless data communication.

To recharge the batteries 134, a magnetic charging connector 148 is connected to the frame 12 between the lower ends of the seat tube 18 and the down tube 20 as best seen in Fig. 2. The connector 148 is electrically connected to the BMS 142. In some embodiments, the connector 148 also permits the exchange of data with the power and control electronics 136 for diagnostic and/or programming purposes.

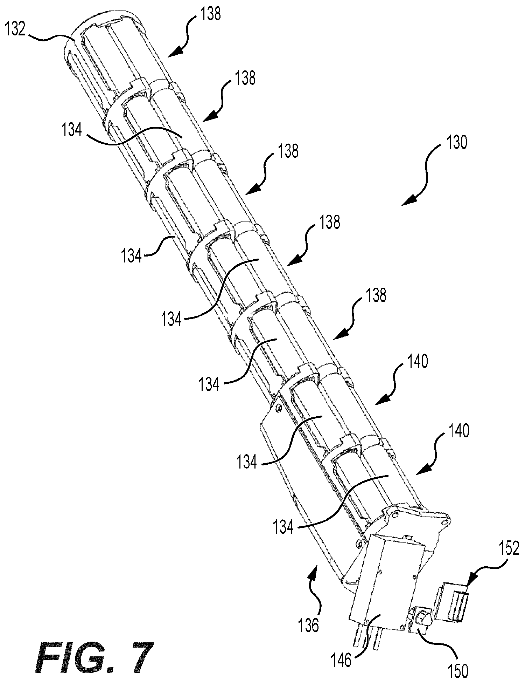

The MCU 146 is connected to the electric motor 104 via a connector 150 (Fig. 7) to supply power from the batteries 134 to the electric motor 104 and to control the electric motor 104. Connectors 152 connect the TCU 144 to a speed sensor 154, a torque sensor 156, the shifter 32, a display 158 and electric shift motors 160, 162 of the transmission 102 (Fig. 8). The speed sensor 154 (Fig. 1) senses a speed of rotation of the rear wheel 62 to receive a signal indicative of a speed of the pedelec 10. In the present embodiment, the speed sensor 154 is a Hall sensor, but other types of speed sensors are contemplated. The torque sensor 156 is disposed in the housing 106 to receive a signal indicative of a torque applied by the crank arms 110 as will be described below. In the present embodiment, the torque sensor 154 is a contactless strain gauge, but other types of torque sensors are contemplated. The electric shift motors 160, 162 are controlled by the TCU 144 to shift the transmission 102 between its various gears. The TCU 144 controls the electric shift motors 160, 162 based on the signals received from the shifter 32, the speed sensor 154 and the torque sensor 156. The display 158 is provided on or near the handlebar 26 and receives signals from the TCU 144 to display a speed of the pedelec 10 and a selected gear of the transmission 102 and other information to the cyclist riding the pedelec 10. The MCU 146 controls the electric motor 104 based at least in part on the signals received from the TCU 144 based at least in part on the speed sensor 154 and the torque sensor 156. It is contemplated that the MCU 146 could stop powering the electric motor 104 when the pedelec 10 exceeds a predetermined speed, such as 25 km/h or 32 km/h. It is contemplated that the MCU 146 could stop powering the electric motor 104 when the cyclist riding the pedelec 10 is not pedaling. In some embodiments, it is contemplated that the shifter 32 could be omitted such that the TCU 144 could automatically control shifting of the transmission 102 based at least in part on the signal received from the torque sensor 146. It is also contemplated that the pedelec 10 could be provided with a throttle actuator and that the MCU 146 could power the electric motor 104 based on the position of the throttle actuator even when the cyclist riding the pedelec 10 is not pedaling.

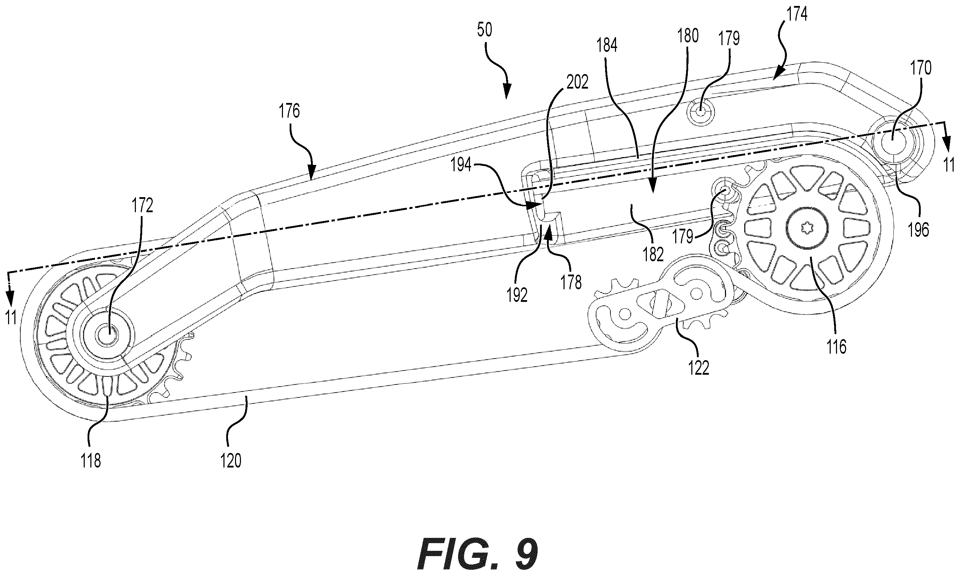

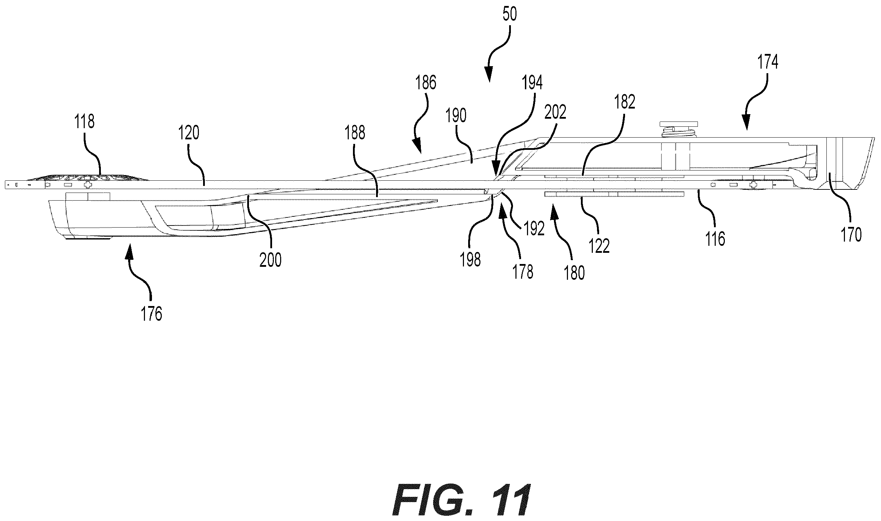

Turning now to Figs. 9 to 11, the chain stay 50 will be described in more detail. The chain stay 50 defines an aperture 170 at a front thereof to permit the pivotal connection of the chain stay 50 to the frame 12 about the pivot axis 52. The chain stay 50 also defines an aperture 172 at a rear thereof to permit the rotational connection of the rear wheel 62 and of the driven sprocket 118 to the chain stay 50. The chain stay 50 has a left portion 174 and a right portion 176 that are laterally spaced from each other (see Fig. 11) and are interconnected by a diagonally extending portion 178. In the present embodiment, the three portions 174, 176, 178 are integrally formed as a single part. The aperture 170 is defined near the front of the left portion 174. The aperture 172 is defined near the rear of the right portion 176. The left portion 174 also defines two aperture 179 to permit connection of the right arm 60 used to connect the chain stay 50 to the shock absorber 54. The crankshaft 108 is disposed vertically lower than the left portion 174 of the chain stay 50.

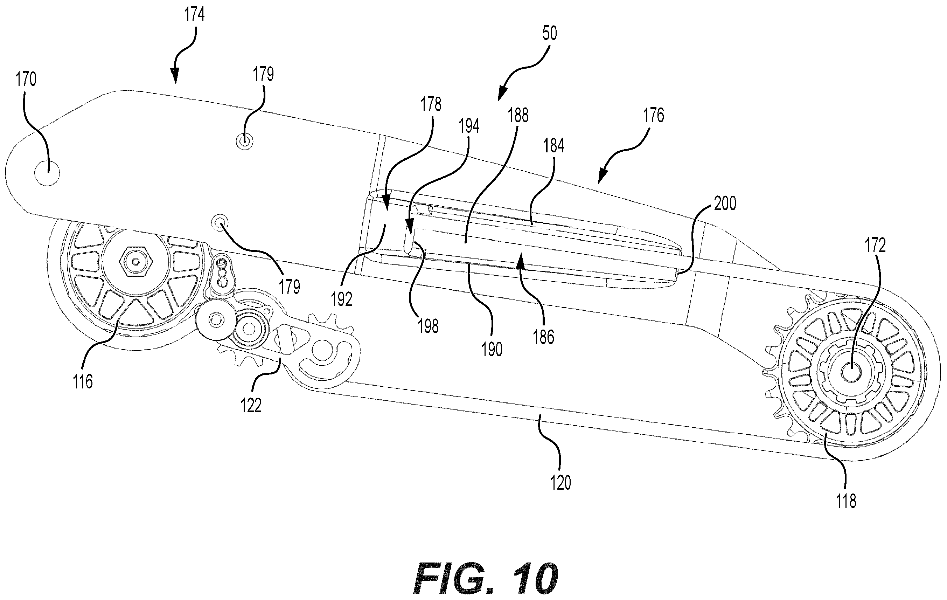

As shown in Fig. 9, the left portion 174 defines a recess 180 on a right side thereof that is bound by a side wall 182 and a top wall 184. As shown in Fig. 10, the right portion 176 defines a recess 186 on a left side thereof that is bound by a side wall 188, the top wall 184 and a lower wall 190. The diagonally extending portion 178 has a wall 192 extending between the side walls 182, 188. The wall 192 defines an aperture 194. As best seen in Fig. 11, the side wall 182 is laterally spaced from the side wall 188 and the wall 192 is skewed relative to the side walls 182, 188. The top wall 184 extend in both left and right portions 174, 176 and is connected to the tops of the walls 182, 188, 192. The front end 196 of the wall 182 is forward of the front end 198 of the wall 188. The rear end 200 of the wall 188 is rearward of the rear end 202 of the wall 182. In the present embodiment, as best seen in Fig. 11, the front end 198 of the wall 188 is rearward of the rear end 202 of the wall 182, but it is contemplated that the front end 198 of the wall 188 could be forward of the rear end 202 of the wall 182. In the present embodiment, the wall 192 extends between the rear end 200 of the wall 182 and the front end 198 of the wall 188, but it is contemplated that it could extend between other portions of the walls 182, 188.

As can be seen in Fig. 9, the top portion of the drive sprocket 116 is received in the recess 180. The portion of the chain 120 extending between the tops of the drive and driven sprockets 116, 118 extends in the recess 180, passes through the aperture 194, and extends in the recess 186, such that the wall 182 is disposed on the left side of this portion of the chain 120 and the wall 188 is disposed on a right side of this portion of the chain 120. As a result of this arrangement, the wall 182 is disposed laterally between this portion of the chain 120 and the frame 12, and this portion of the chain 120 is disposed laterally between the wall 188 and the frame 12.

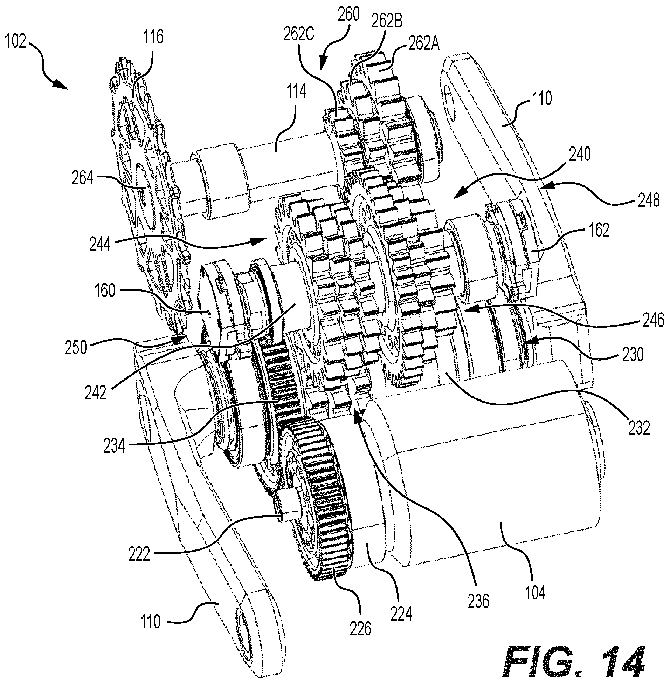

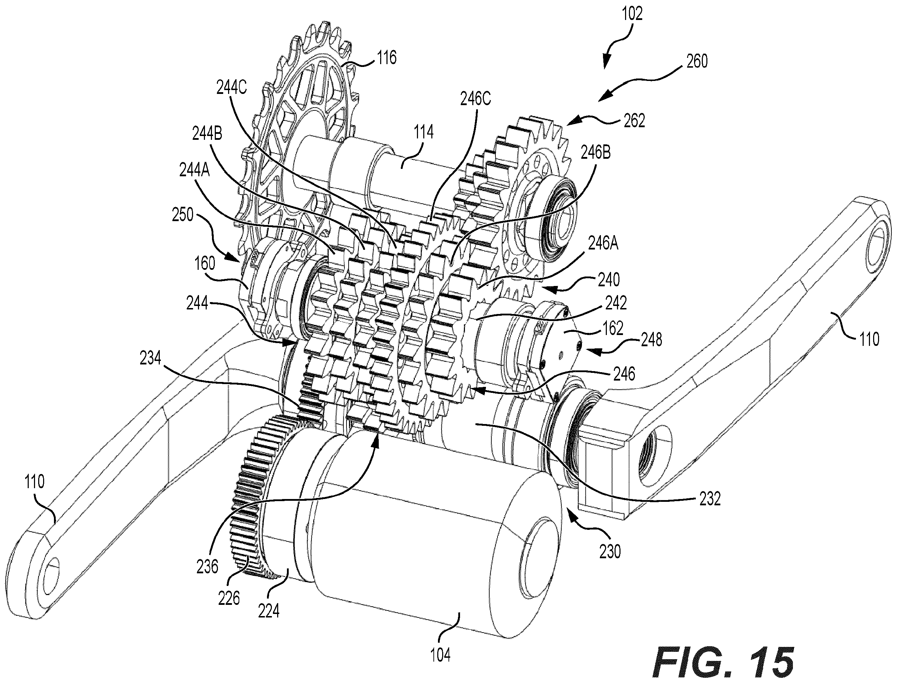

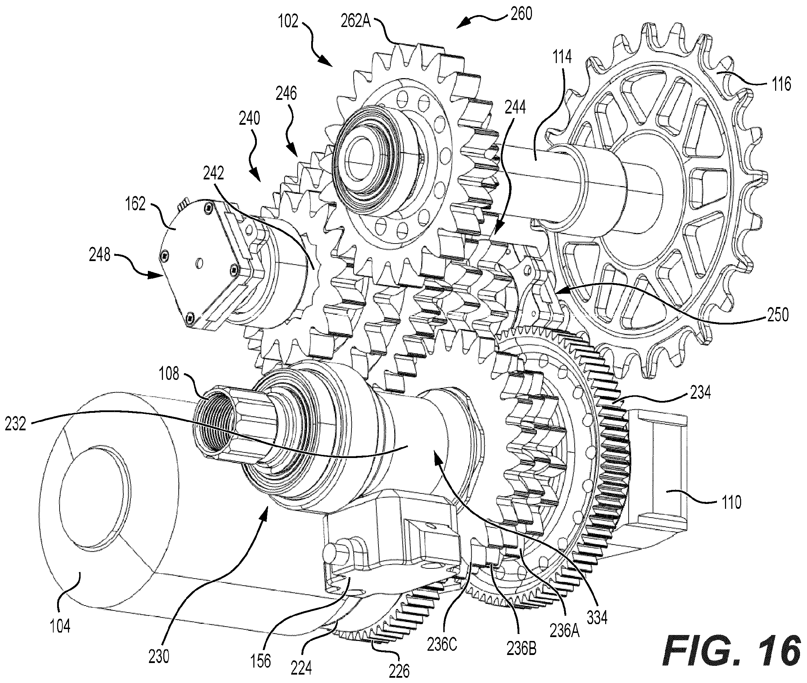

Turning now to Figs. 13 to 18, the powertrain 100 will be described in more detail. As described above, the powertrain 100 includes the transmission 102, the electric motor 104, the crankshaft 108, crank arms 110, pedals 112, the drive sprocket 116, the driven sprocket 118, the flexible drive member 120 and the chain tensioner 122.

The transmission 102 includes the housing 106, an input shaft assembly 230, a countershaft assembly 240, left and right shift assemblies 248, 250 and an output shaft assembly 260.

As best seen in Fig. 13, the housing 106 has a central portion 210 having left and right sides closed by left and right side covers 212, 214 respectively. The central portion has two internally threaded sleeves 216 on a top therefore used to fasten the housing 106 to the lower end of the seat tube 18. Each of the left and right side covers 212, 214 has two tabs 218 defining apertures 220. The lower end of the down tube 20 is received between the left and right tabs 218 and fasteners are inserted through the apertures 220 to fasten the housing 106 to the lower end of the down tube 20. Oil is provided inside the housing 106. As the components of the transmission 102 and the motor 104 rotate inside the housing 106, the oil is projected by the rotating components, thereby lubricating the components housed inside the housing 106.

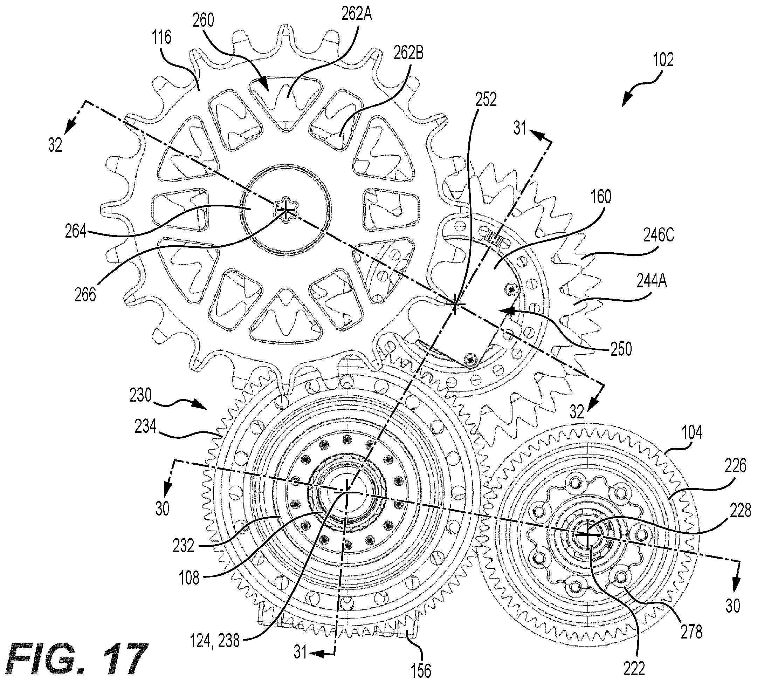

The motor 104 has a motor shaft 222 that drives a cycloidal drive 224. The cycloidal drive 224 operatively connects the motor 104 to a motor gear 226 to cause the motor 104 to drive the motor gear 226. The motor gear 226 is connected to the right end of the motor shaft 222. The motor shaft 222 defines a motor shaft axis 228 (Fig. 17) about which the motor shaft 222 and the motor gear 226 rotate. The motor 104, cycloidal drive 224 and motor gear 226 are disposed in a lower front portion of the housing 106. The motor 104, cycloidal drive 224 and motor gear 226 will be described in more detail below.

The input shaft assembly 230 is housed in the housing 106. The input shaft assembly 230 includes an input shaft 232, an input gear 234, and three gears 236A, 236B, 236C (referred to collectively as gears 236). The input shaft 232 is hollow. The crankshaft 108 extends through the input shaft 232. The input shaft 232 defines an input shaft axis 238 (Fig. 17) about which the input shaft 232, the input gear 234 and the gears 236 rotate. The input shaft axis 238 and the crankshaft axis 124 are coaxial. The input shaft 232 and the crankshaft 108 are parallel to the motor shaft 222. The input gear 234 is connected to the right end of the input shaft 232. The input gear 234 engages and is driven by the motor gear 226. The gears 236 are mounted to the input shaft 232 to the left of the input gear 234. The gears 236 are rotationally fixed relative to the input shaft 232. The input shaft assembly 230 will be described in more detail below.

The countershaft assembly 240 is housed in the housing 106. The countershaft assembly 240 includes a countershaft 242, three gears 244A, 244B, 244C (referred to collectively as gears 244) and three gears 246A, 246B, 246C (referred to collectively as gears 246). The countershaft 242 is hollow. Portions of the left and right shift assemblies 248, 250 are received inside the countershaft 242. The left shift assembly 248 includes the electric shift motor 162. The right shift assembly 250 includes the electric shift motor 160. As can be seen, the countershaft 242 is disposed axially between the shift motors 160, 162. The shift assemblies 248, 250 are disposed in the housing 106. The shift assemblies 248, 250 will be described in more detail below. The countershaft 222 defines a countershaft axis 252 (Fig. 17) about which the countershaft 242, the gears 244 and the gears 246 rotate. The countershaft 242 is parallel to the input shaft 232. The gears 244 are rotationally mounted on a right side of the countershaft 242. The gear 244A engages and is driven by the gear 236A. The gear 244B engages and is driven by the gear 236B. The gear 244C engages and is driven by the gear 236C. The right shift assembly 250 selectively rotationally fixes one of the gears 244 at a time to the countershaft 242 in order to drive the countershaft 242 as will be described in more detail below. The gears 246 are rotationally mounted on a left side of the countershaft 242. The left shift assembly 248 selectively rotationally fixes one of the gears 246 at a time to the countershaft 242 as will be described in more detail below. The countershaft assembly 240 will be described in more detail below.

The output shaft assembly 260 is housed in part in the housing 106. The output shaft assembly 260 includes the output shaft 114 and three gears 262A, 262B, 262C (referred to collectively as gears 262). The output shaft 114 is hollow, but it is contemplated that it could be solid. The output shaft 114 extends through the right side cover 214 of the housing 106. The drive sprocket 116 is fastened to the right end of the output shaft 114 by a threaded fastener 264. The output shaft 114 defines an output shaft axis 266 (Fig. 17) about which the output shaft 114, the gears 262 and the drive sprocket 116 rotate. The drive sprocket 116, the output shaft 114 and the gears 262 are coaxial. The output shaft 114 is parallel to the input shaft 232 and to the countershaft 242. The gears 262 are mounted to a left side of the output shaft 232. The gears 262 are rotationally fixed relative to the output shaft 114. The gear 262A engages the gear 246A and is driven by the gear 246A when the gear 246A is rotationally fixed to the countershaft 242. The gear 262B engages the gear 246B and is driven by the gear 246B when the gear 246B is rotationally fixed to the countershaft 242. The gear 262C engages the gear 246C and is driven by the gear 246C when the gear 246C is rotationally fixed to the countershaft 242. The output shaft assembly 260 will be described in more detail below.

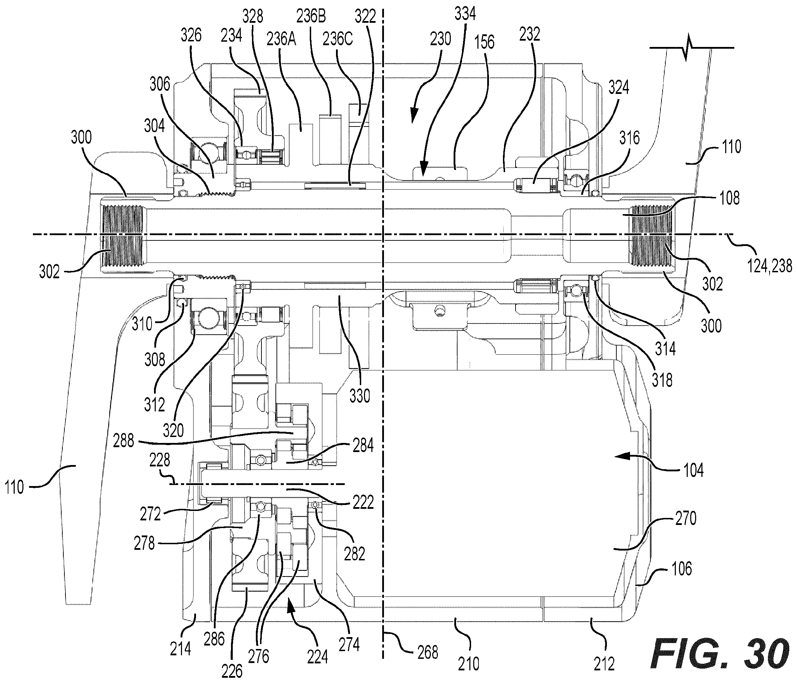

With reference to Figs. 30 to 32, it can be seen that the drive sprocket 116, the motor shaft 222, the cycloidal drive 224, the motor gear 226, the input gear 234, the gears 236, the gears 244, and the shift assembly 250 are disposed on a right side of a plane 268. The plane 268 is a vertical plane that is normal to the input shaft 232 and is located at a lateral center of the crankshaft 108. It can also be seen that the torque sensor 156, the gears 246, the shift assembly 248 and the gears 262 are disposed on a left side of the plane 268. As can also be seen in Fig. 30, the gears 236 are disposed laterally (i.e. in a direction of the input shaft axis 238) between the input gear 234 and the plane 268. With continued reference to Fig. 30, it can be seen that a bulk of the motor 104 is disposed on a left side of the plane 268. This arrangement of the above-recited components on either side of the plane 268 helps in distributing the weight of these components such that a center of mass of these components is close to or at the plane 268 in a lateral direction.

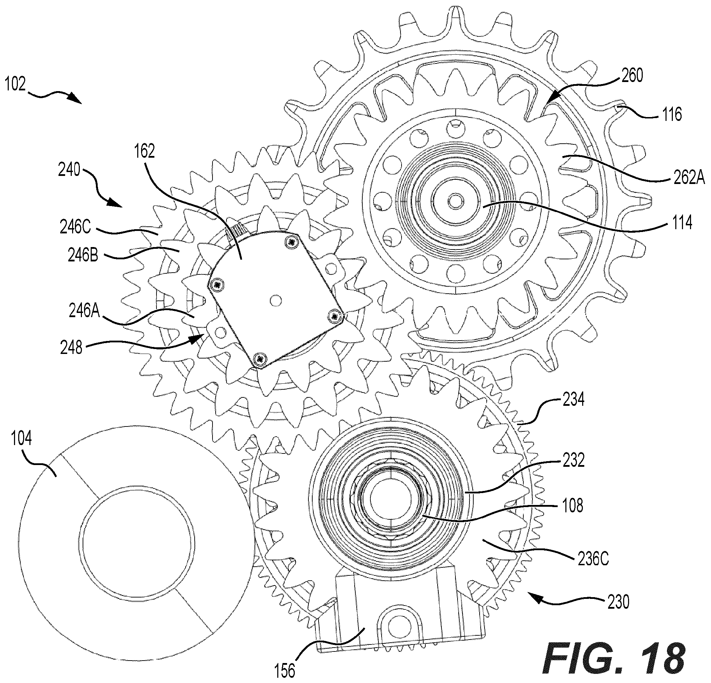

Returning to Fig. 18, it can be seen that the output shaft 114 is rearward of and vertically higher than the input shaft 232. With reference to Fig. 17, it can be seen that in a horizontal direction: the input shaft axis 238 and the countershaft axis 252 are between the motor shaft axis 228 and the output shaft axis 266; the countershaft axis 252 is between the motor shaft axis 228 and the input shaft axis 238; and the input shaft axis 238 is between the countershaft axis 252 and the output shaft axis 266. As can also be seen in Fig. 17, in in a vertical direction: the countershaft axis 252 is vertically lower than the output shaft axis 266; the input shaft axis 238 is vertically lower than the countershaft axis 266; and the motor shaft axis 228 is vertically lower than the input shaft axis 238.

During operation, the input shaft 232 is driven by the crankarms 110 via the crankshaft 108 and/or by the electric motor 104 via the motor gear 226 and the input gear 234. The input shaft 232 drives the gears 236 and the gears 236 drive the gears 244. When one of the gears 244 is rotationally fixed to the countershaft 242 by the shift assembly 250, this gear 244 drives the countershaft 242. When one of the gears 246 is rotationally fixed to the countershaft 242, the countershaft 242 drives this gear 246. This gear 246 drives the corresponding gear 262, which drives the output shaft 114. The output shaft 114 drives the drive sprocket 116, which drives the chain 120, which drives the driven sprocket 118, which drives the rear wheel 62.

As there are three pairs of gears 236, 244 and three pairs of gears 246, 262, there are nine possible gear ratios, also commonly referred as "gears", between the input and output shafts 232, 114 that can be selected by the shift assemblies 248, 250. The lowest gear (i.e. the gear combination providing the lowest output shaft speed for a given input shaft speed) corresponds to the shift assembly 250 rotationally fixing the gear 244A to the countershaft 242 and to the shift assembly 248 rotationally fixing the gear 246A to the countershaft 242. The highest gear (i.e. the gear combination providing the highest output shaft speed for a given input shaft speed) corresponds to the shift assembly 250 rotationally fixing the gear 244C to the countershaft 242 and to the shift assembly 248 rotationally fixing the gear 246C to the countershaft 242. It is contemplated that in alternative embodiments there could be two or more than three gears 244 with a corresponding number of gears 236. It is also contemplated that in alternative embodiments there could be two or more than three gears 246 with a corresponding number of gears 262. It is contemplated that in alternative embodiments, there could be a single gear 244 rotationally fixed to the countershaft 242 and a single gear 236, in which case the shift assembly 250 would be omitted. It is contemplated that in alternative embodiments, there could be a single gear 246 rotationally fixed to the countershaft 242 and a single gear 262, in which case the shift assembly 248 would be omitted.

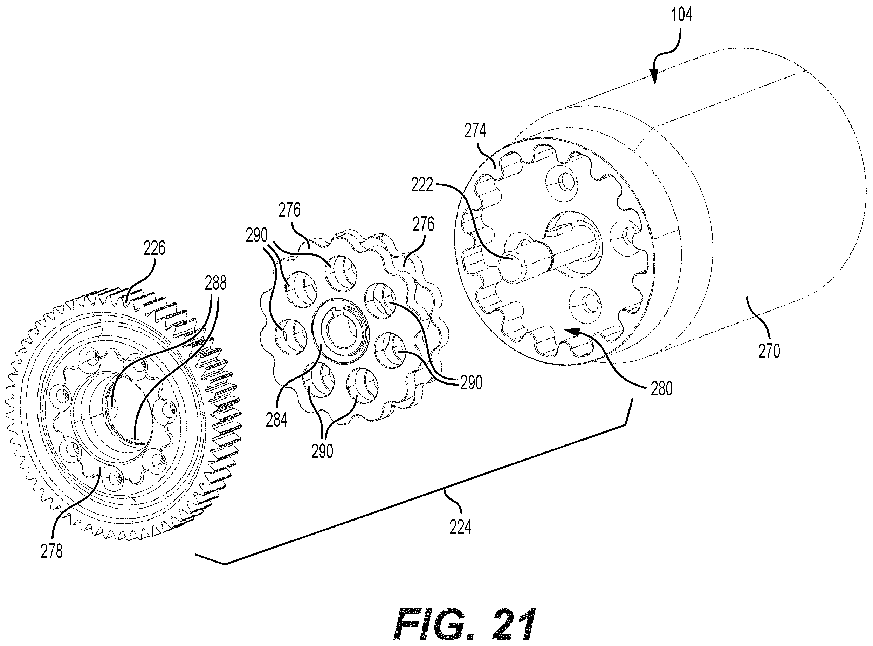

Turning now to Figs. 21 and 30, the motor 104, the cycloidal drive 224 and the motor gear 226 will be described in more detail. The motor 104 has a motor housing 270 inside which are disposed a rotor and a stator (not shown). The motor shaft 222 is connected to and driven by the rotor. The distal end (i.e. the right end) of the motor shaft 222 is rotationally supported in the right cover 214 of the housing 106 by a needle bearing 272 (Fig. 30). The cycloidal drive 224 includes a ring gear 274, two cycloidal discs 276 and an output ring 278. The ring gear 274 is fixed to the motor housing 270. The ring gear 274 has a plurality of internal teeth 280. A ball bearing 282 (Fig. 30) is provided radially between the ring gear 274 and the motor shaft 222. An eccentric 284 is keyed on the motor shaft 222. The cycloidal discs 276 are rotationally mounted to the eccentric 284. As the motor shaft 222 rotates, external teeth of the cycloidal discs 276 engage the teeth 280 of the ring gear 274 and the cycloidal discs 276 turn about the motor shaft 222 in a cycloidal motion. The output ring 278 is rotationally mounted to the motor shaft 222 by a ball bearing 286 (Fig. 30). The output ring 278 has seven posts 288 that are received in seven openings 290 defined in each of the cycloidal discs 276. As the cycloidal discs 276 turn, they drive the output ring 278 via the posts 288. As a result of this arrangement, the output ring 278 rotates slower than the motor shaft 222. The motor gear 226 is fixedly connected to and turns together with the output ring 278. It is contemplated that in some embodiments, the cycloidal drive 224 could be replaced by another type of reduction drive.

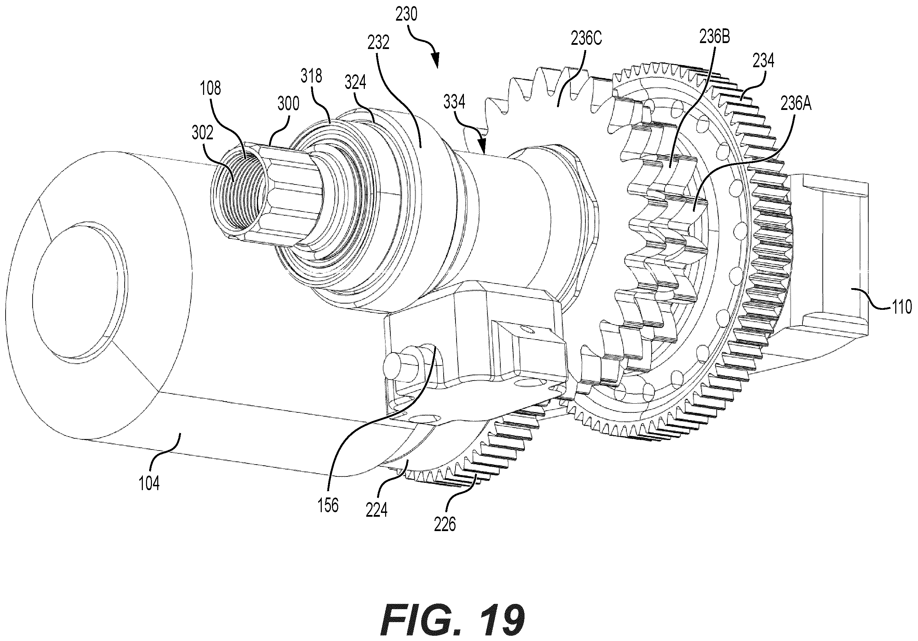

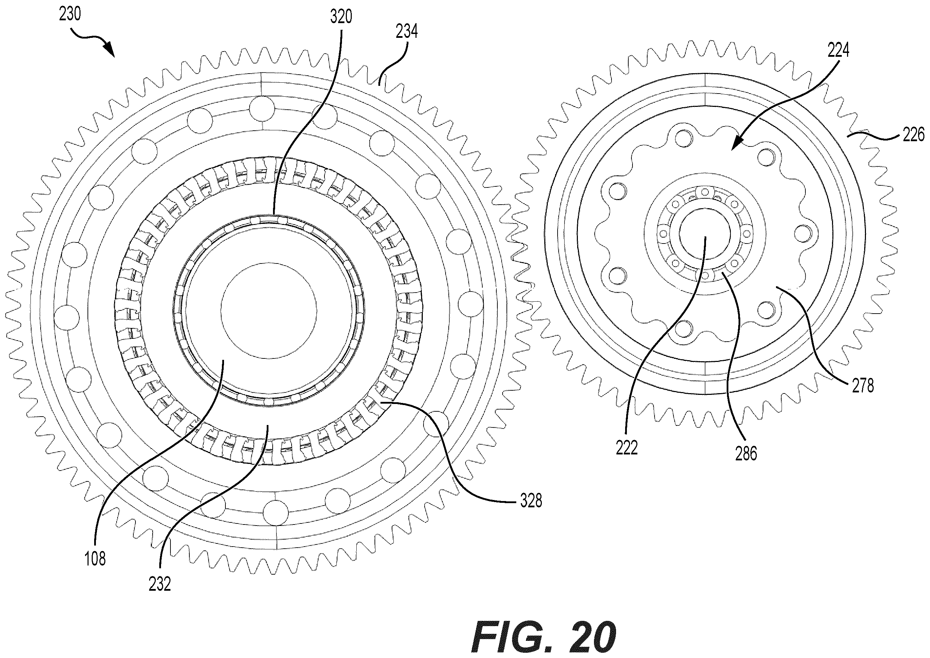

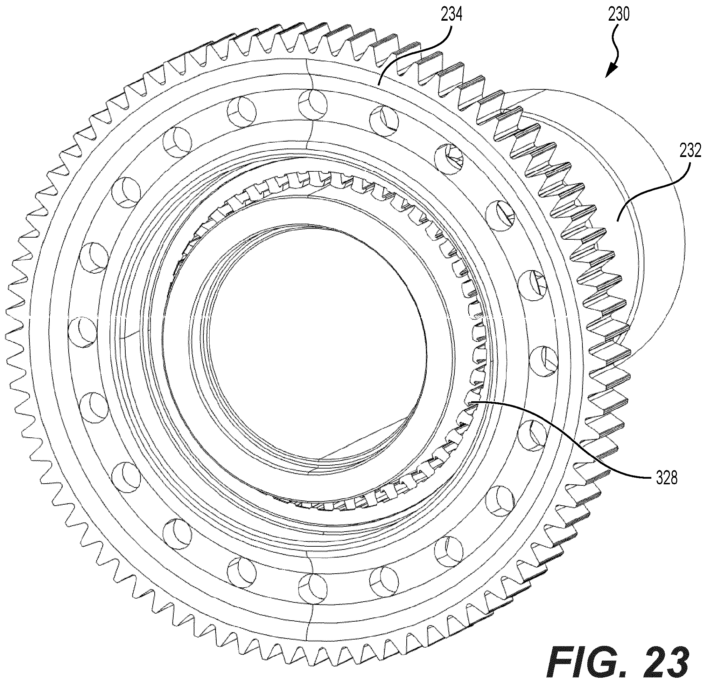

With reference to Figs. 19, 20, 22 to 25, 30 and 31, the crankshaft 108 and the input shaft assembly 230 will be described in more detail.

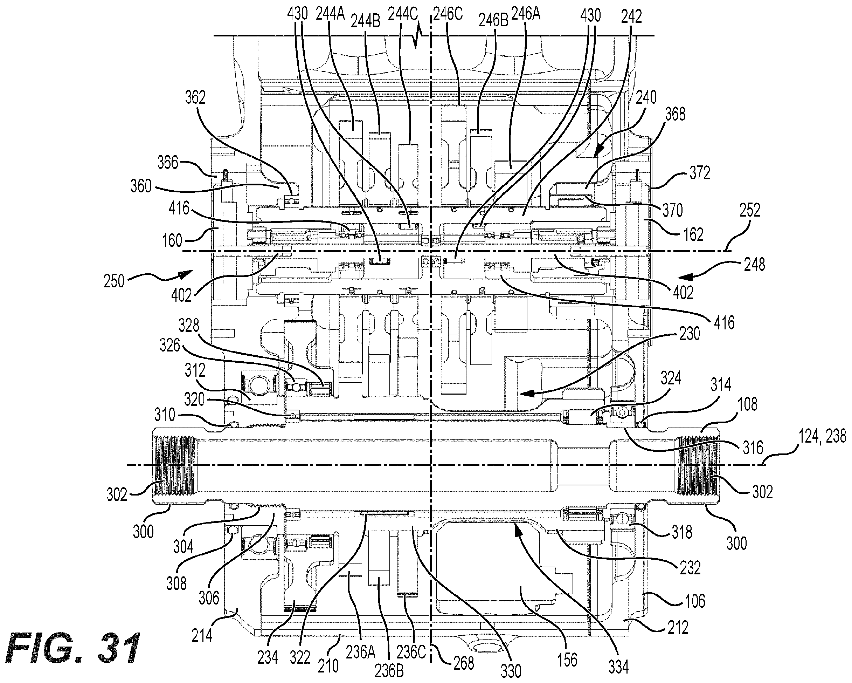

As can be seen in Figs. 30 and 31, the ends of the crankshaft 108 are disposed outside of the housing 106. The ends of the crankshaft 108 have external splines 300 and internal threads 302. The crank arms 110 have internal splines (not shown) that engage the external splines 300 of the ends of the crankshaft 108. As such, the crank arms 110 are rotationally fixed relative to the crankshaft 108. Threaded fasteners (not shown) are threaded into the internal threads 302 of the ends of the crankshaft 108 to secure the crank arms 110 to the crankshaft 108. The crankshaft 108 is hollow, but it is contemplated that at least some portions of the crankshaft 108 could be solid.

With reference to Figs. 30 and 31, the right end portion of the crankshaft 108 is fastened via threads 304 to a sleeve 306. The sleeve 306 is received in an aperture defined in the right side cover 214 of the housing 106. A seal 308 disposed between the sleeve 306 and the right side cover 214 and another seal 310 disposed between the sleeve 306 and the crankshaft 108 prevent oil present in the housing 106 from escaping the housing at these locations. The sleeve 306 is rotationally supported in the right side cover 214 by a ball bearing 312. The sleeve 306 and the crankshaft 108 rotate together. The left end portion of the crankshaft 108 is received in an aperture defined in the left side cover 212 of the housing 106. A seal 314 disposed between the crankshaft 108 and the left side cover 212 prevents oil present in the housing 106 from escaping the housing 106 at this location. A sleeve 316 is connected to and disposed around the left end portion of the crankshaft 108. The sleeve 316 is rotationally supported in the left side cover 212 by a ball bearing 318. The sleeve 316 and the crankshaft 108 rotate together.

With reference to Figs. 30 and 31, as previously described, the crankshaft 108 extends through the hollow input shaft 232. As can be seen, the ends of the crankshaft 108 extend past the ends of the input shaft 232. The input shaft 232 can rotate relative to the crankshaft 108. The right end of the input shaft 232 is rotationally connected to the crankshaft 108 by a ball bearing 320 disposed radially between the input shaft 232 and the crankshaft 108. A needle bearing 322 disposed between the input shaft 232 and the crankshaft 108 rotationally connects the input shaft 232 and the crankshaft 108 at a position aligned with the portion of the input shaft 232 to which the gears 236 are connected. The left end of the input shaft 232 is connected to the crankshaft 108 by a clutch 324 disposed radially between the input shaft 232 and the crankshaft 108. The clutch 324 is a one-way freewheel clutch. More specifically, in the present embodiment the clutch 324 is a sprag clutch. It is contemplated that in some embodiment, another type of clutch 324 could be used. The sprag clutch 324 allows relative rotation between the input shaft 232 and the crankshaft 108 in one direction but not in the other. For example, should the input shaft 232 be driven by the motor 104 faster than the crankshaft 108 is being turned by the biker riding the pedelec, such as when the biker is not pedaling, the sprag clutch 324 will slip allowing the input shaft 232 to rotate relative to the crankshaft 108. Similarly, should the biker pedal to make the pedelec 10 move forward while the input shaft 232 is not turning (i.e. starting to pedal from rest with the motor 104 off) or while the input shaft 232 is not turning faster than the crankshaft 108 is being turned, the sprag clutch 324 will engage the input shaft 232 and the crankshaft 108 together such that the crankshaft 108 drives the input shaft 232.

The input gear 234 is rotationally connected to the right end of the input shaft 232 by a ball bearing 326 disposed radially between the input gear 324 and the input shaft 232. A clutch 328 is disposed radially between the input shaft 232 and the input gear 324 at the right end of the input shaft 232 next to the ball bearing 326. The clutch 328 is a one-way freewheel clutch. More specifically, in the present embodiment the clutch 328 is a sprag clutch. It is contemplated that in some embodiment, another type of clutch 328 could be used. The sprag clutch 328 allows relative rotation between the input shaft 232 and the input gear 234 in one direction but not in the other. For example, should the input shaft 232 be driven by the crankshaft 108 faster than the input gear 234 is being turned by motor 104, the sprag clutch 328 will slip allowing the input shaft 232 to rotate relative to the input gear 234. Therefore, when the motor 104 is not driving the input shaft 232, it is effectively decoupled from the input shaft assembly 230 and does not create drag on the powertrain 100. Similarly, should the motor 104 drive the input gear 234 while the input shaft 232 is not turning (i.e. starting from rest without pedaling) or while the input shaft 232 is not turning faster than the input gear 234 is being turned, the sprag clutch 328 will engage the input shaft 232 and the input gear 234 together such that the input gear 234, and therefore the motor 104, drives the input shaft 232.

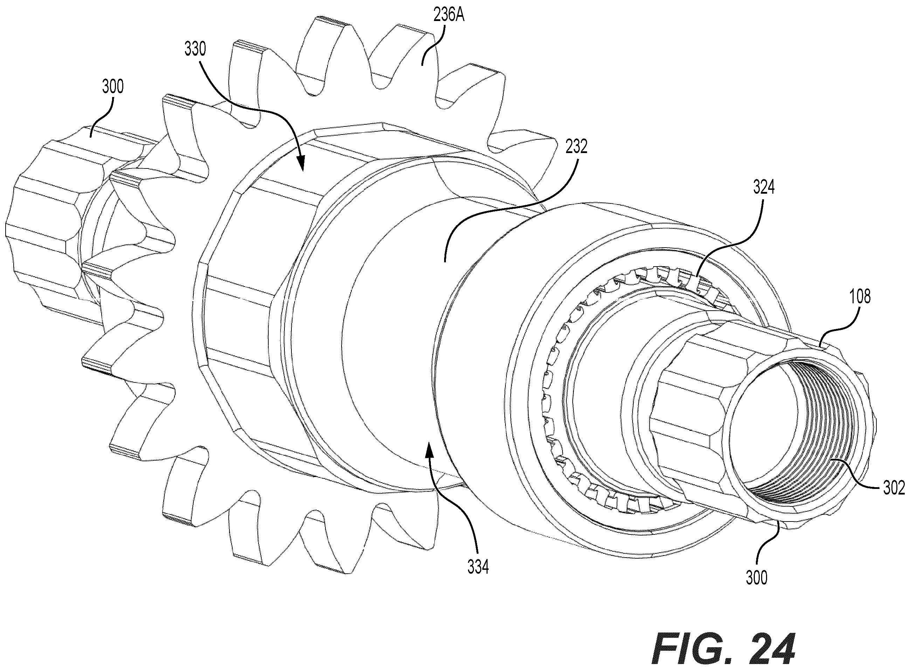

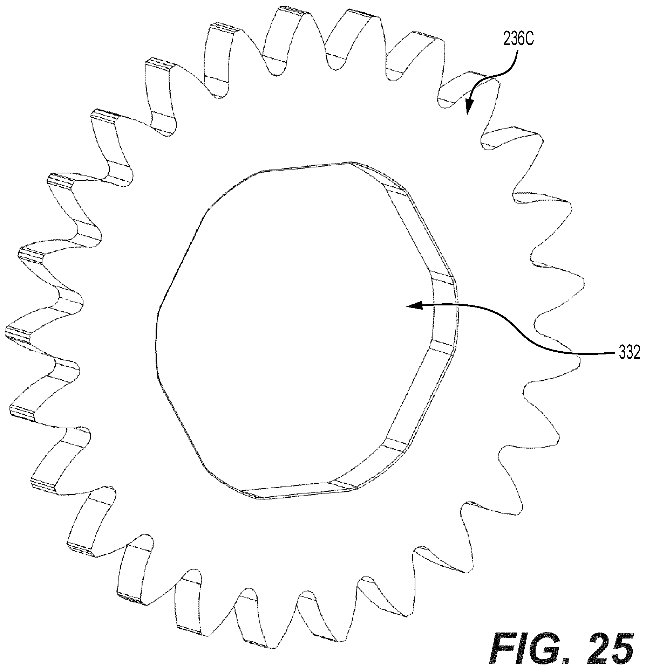

As can be best seen in Figs. 24 and 30, the gear 236A is integrally formed with the input shaft 232. As such, the gear 236A and the input shaft 232 are a single part. With reference to Fig. 24, the portion 330 of the input shaft 232 to the left of the gear 236A has a generally dodecagonal shape with six of the sides having a first length and six of the sides having a second, shorter, length. As shown in Fig. 25 for the gear 236C, the gears 236B and 236C have a central aperture 332 having a shape corresponding to the shape of the portion 330 of the input shaft 232. The gears 236B and 236C are disposed on the portion 330 of the input shaft 232, thereby rotationally fixing the gears 236B and 236C relative to the input shaft 232. It is contemplated that the portion 330 of the input shaft 232 could have a different shape, with the apertures 332 of the gears 236B and 236C having a corresponding shape. It is also contemplated that the gears 236B and 236C could be rotationally fixed to the input shaft 232 in other ways, such as by splines for example. It is also contemplated that the gear 236A could be a separate part from the input shaft 232 and be mounted to the input shaft 232 in the same manner as the gears 236B and 236C. It is also contemplated that the gear 236C could be integrally formed with the input shaft 232, in which case the gear 236A would be mounted to the input shaft 232 in the same manner as the gear 236B.

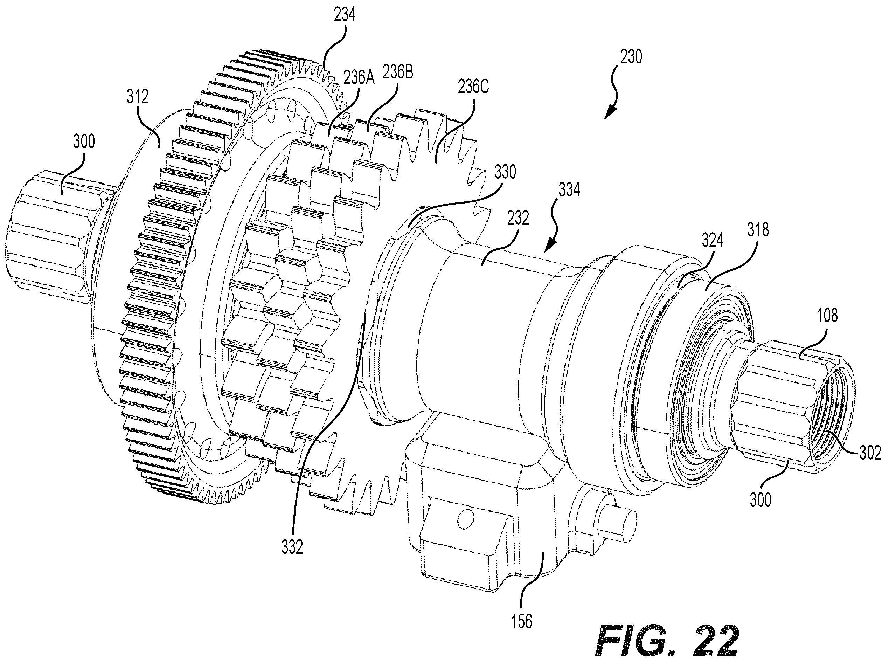

With reference to Figs. 19 and 22, the input shaft 232 has a circumferentially recessed portion 334 located between the gears 326 and the left end of the input shaft 232. The torque sensor 156 is aligned with the recessed portion 334 and is partially received in the recess formed by the recessed portion 334. As such, the torque sensor 156 is disposed between the left end portion of the input shaft 232 and the gears 236 in the direction defined by the central axis of the input shaft 232 (i.e. the input shaft axis 238). As can be seen in Fig. 30, the torque sensor 156 is also disposed between the clutch 324 and the gears 236 in the direction defined by the input shaft axis 238, and between the clutch 324 and the needle bearing 322 in the direction defined by the input shaft axis 238. In this position, the torque sensor 156 senses the torque applied to the input shaft 232. More specifically, in this position, the torque sensor 156 senses the torque applied by the crankshaft 108 to the input shaft 232. As the torque applied by both crank arms 110 is transferred to the left end of the input shaft 232 by the crankshaft 108 and the sprag clutch 324, the torque sensor 156 senses the torque applied by both crank arms 110. As such, in this embodiment, there is no need to have one torque sensor per crank arm 110, as the arrangement described above allows the single torque sensor 156 to sense the torque from both crank arms 110. Based on the torque sensed by the torque sensor 156, the MCU 146 controls the motor 104 to provide more or less assistance to the biker pedaling on the pedelec 10. A high torque sensed by the torque sensor 156 is indicative of the biker applying a lot of torque via the crank arms 110 and is therefore making a lot of physical effort pedaling. In response, the MCU 146 controls the motor 104 to apply torque to the input shaft 232 via the motor gear 226 and the input gear 234, thereby assisting the biker. The amount of torque to be applied by the electric motor 104 could depend on a selected degree of assistance selected by the biker in embodiments allowing for varying degrees of assistance. The torque sensed by the torque sensor 156 can also be used by the TCU 144 in some embodiments to automatically control the shift assemblies 248, 250 to change gears in order to make it easier or harder for the biker to pedal.

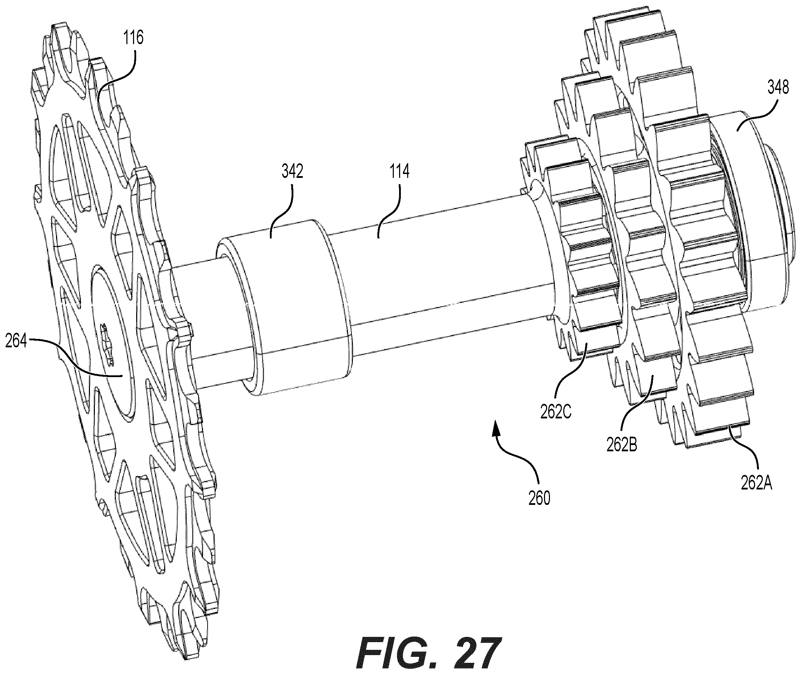

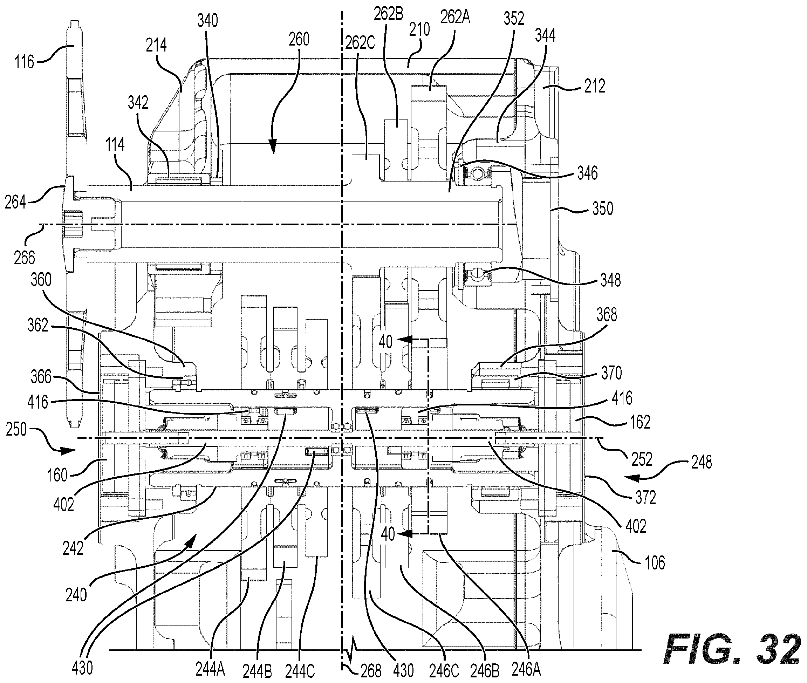

Turning now to Figs. 27 to 29 and 32, the output shaft assembly 260 will be described in more detail. With reference to Fig. 32, the right end portion of the output shaft 114 is received in an aperture defined in the right side cover 214 of the housing 106. A seal 340 disposed between the output shaft 114 and the right side cover 214 prevents oil present in the housing 106 from escaping the housing at this location. The output shaft 114 is rotationally supported in the right side cover 214 by a needle bearing 342. The left end portion of the output shaft 114 is received in an internal flange 344 defined by the left side cover 212 of the housing 106. A seal 346 disposed between the output shaft 114 and the flange 344 prevents oil present in the housing 106 from escaping the housing 106 at this location. The output shaft 114 is rotationally supported in the flange 344 of the left side cover 212 by a ball bearing 348. A cap 350 closes an aperture defined in the left side cover 212. Removing the cap 350 provides access to the left end portion of the output shaft 114, the bearing 348 and the seal 346 without having to remove the left side cover 212.

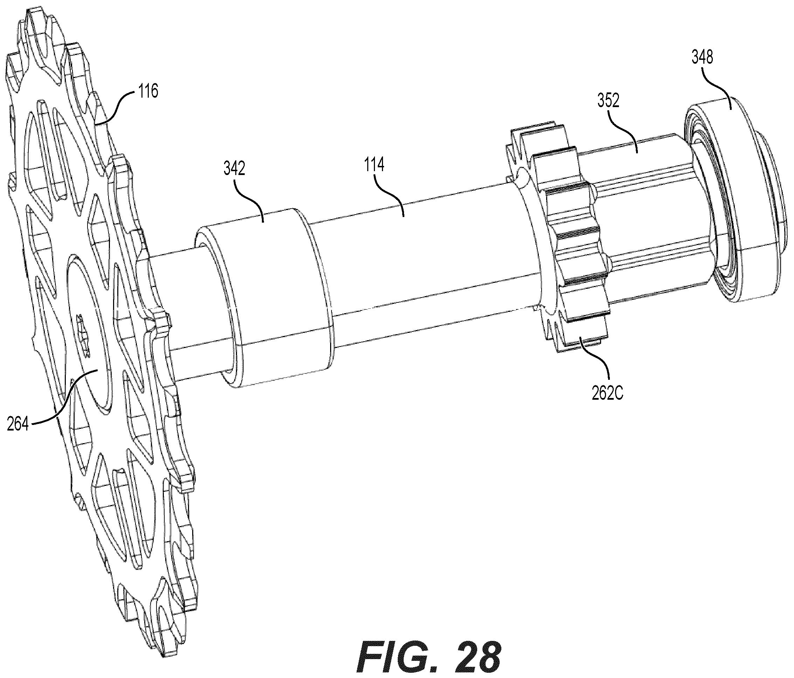

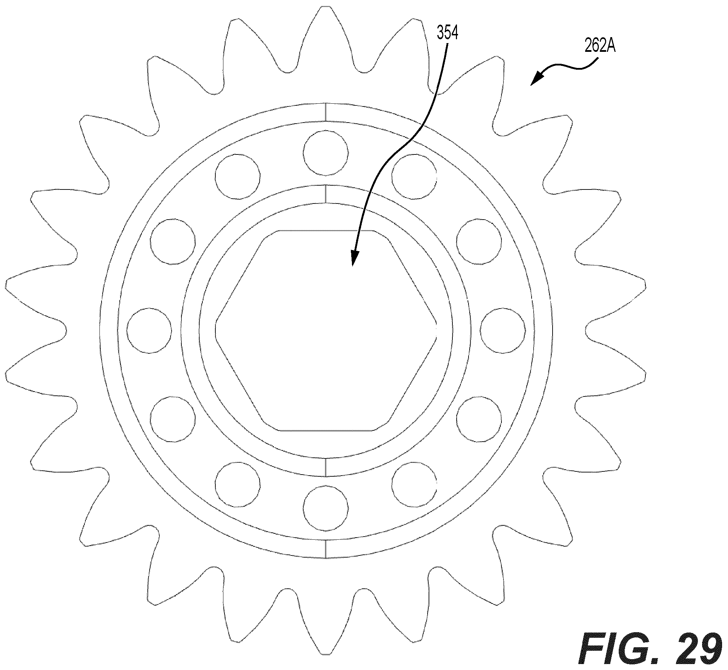

As can be best seen in Figs. 28 and 32, the gear 262C is integrally formed with the output shaft 114. As such, the gear 262C and the output shaft 114 are a single part. With reference to Fig. 28, the portion 352 of the output shaft 114 to the left of the gear 262C has a generally hexagonal shape. As shown in Fig. 29 for the gear 262A, the gears 262A and 262B have a central aperture 354 having a shape corresponding to the shape of the portion 352 of the output shaft 114. The gears 262A and 262B are disposed on the portion 352 of the output shaft 114, thereby rotationally fixing the gears 262A and 262B relative to the output shaft 114. It is contemplated that the portion 352 of the output shaft 114 could have a different shape, with the apertures 354 of the gears 262A and 262B having a corresponding shape. As the portion 352 of the output shaft 114 and the apertures 354 of the gears 262A and 262B have a shape that is different from the shape of the portion 330 of the input shaft 232 and the apertures of the gears 236B and 236C, during assembly of the transmission 102, the gears 262A, 262B cannot be accidentally mounted to the input shaft 232 and the gears 236B, 236C cannot be accidentally mounted to the output shaft 114. It is also contemplated that the gears 262A and 262B could be rotationally fixed to the output shaft 114 in other ways, such as by splines for example. It is also contemplated that the gear 262C could be a separate part from the output shaft 114 and be mounted to the output shaft 114 in the same manner as the gears 262A and 262B. It is also contemplated that the gear 262A could be integrally formed with the output shaft 114, in which case the gear 262C would be mounted to the output shaft 114 in the same manner as the gear 262B.

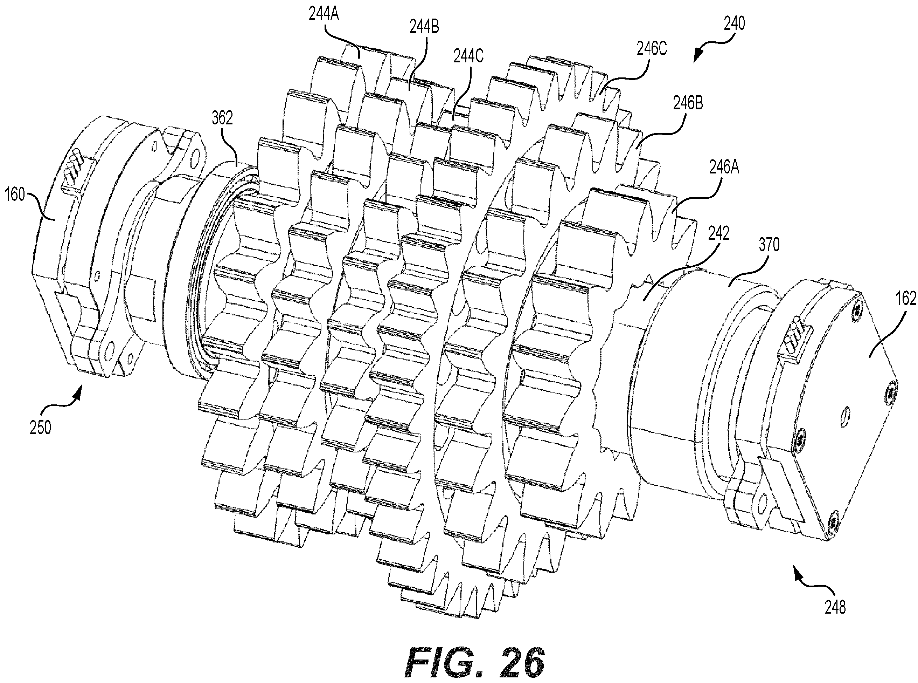

Turning now to Figs. 26 and 31 to 33, the countershaft assembly 240 will be described in more detail. The right end portion of the countershaft 242 is received in an internal flange 360 defined by the right side cover 214 of the housing 106. The countershaft 242 is rotationally supported in the flange 360 of the right side cover 214 by a ball bearing 362. A cap 364 (Fig. 13) closes an aperture 366 defined in the right side cover 214. Removing the cap 364 provides access to the electric shift motor 160 and other components of the right shift assembly 250 without having to remove the right side cover 214. The left end portion of the countershaft 242 is received in an internal flange 368 defined by the left side cover 212 of the housing 106. The countershaft 242 is rotationally supported in the flange 368 of the left side cover 212 by a needle bearing 370. A cap (not shown) closes an aperture 372 defined in the left side cover 212. Removing this cap provides access to the electric shift motor 162 and other components of the left shift assembly 248 without having to remove the left side cover 212.

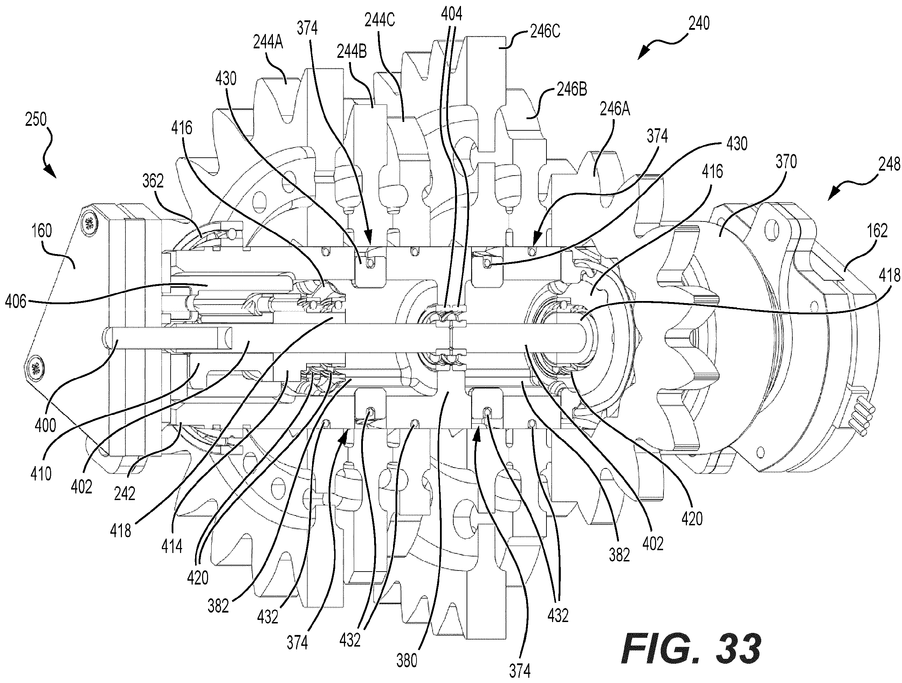

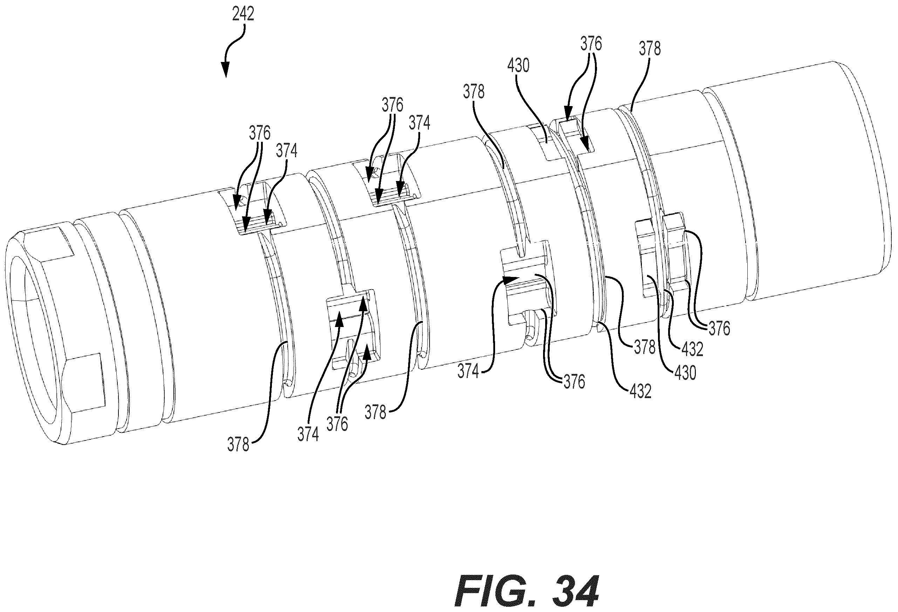

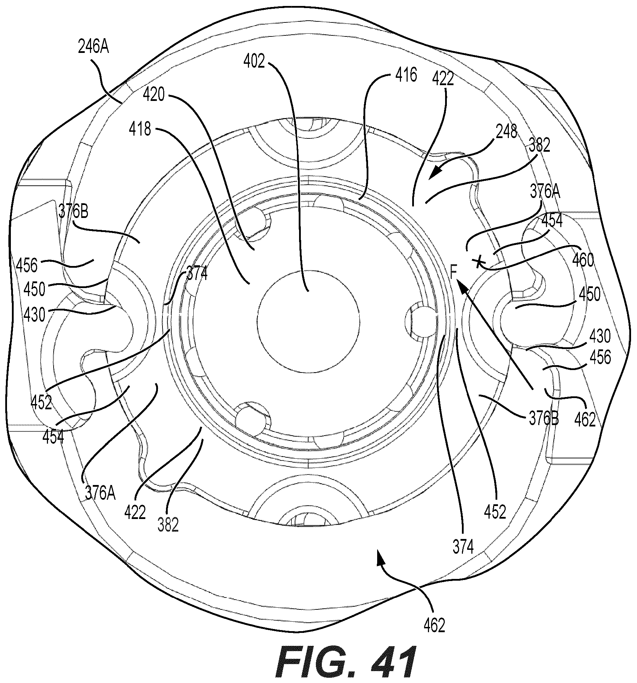

With reference to Figs. 33 and 34, the countershaft 244 defines six pairs of apertures 374. Each pair of apertures 374 is axially aligned with a corresponding one of the gears 244, 246. For each pair of apertures 374, the two apertures 374 are disposed opposite to each other (i.e. at 180 degrees from each other about the central axis 252 of the countershaft 242). Each pair of apertures 374 is disposed at 90 degrees from the pair of apertures 374 that is next to it. For each aperture 374, the countershaft 242 defines two recesses 376 in an outer surface thereof disposed adjacent to the aperture 374 on either side thereof. As best seen in Fig. 41, one of the recesses 376A has a rounded bottom and one of the recesses 376B is flat bottomed. For each pair of apertures 374, the countershaft 242 defines a circumferential groove 378 that is axially aligned with the apertures 374 and recesses 376. It is contemplated that instead of having a pair of apertures 374 for each of the gear 244, 246, there could be only one apertures 374 or three or more apertures 374. As can be seen in Fig. 33, the countershaft 242 has an internal flange 380. The internal flange 380 is located axially between the gears 244C and 246C. On each side of the flange 380, the countershaft 242 defines a pair of axially extending grooves 382. As best seen in Fig. 41, the grooves 382 of the pair of grooves 382 are disposed opposite to each other.

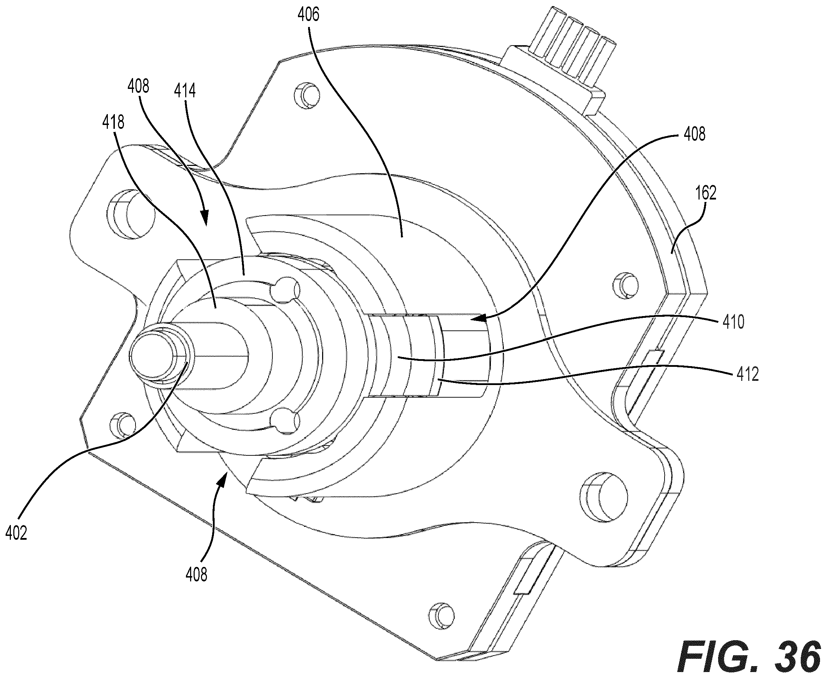

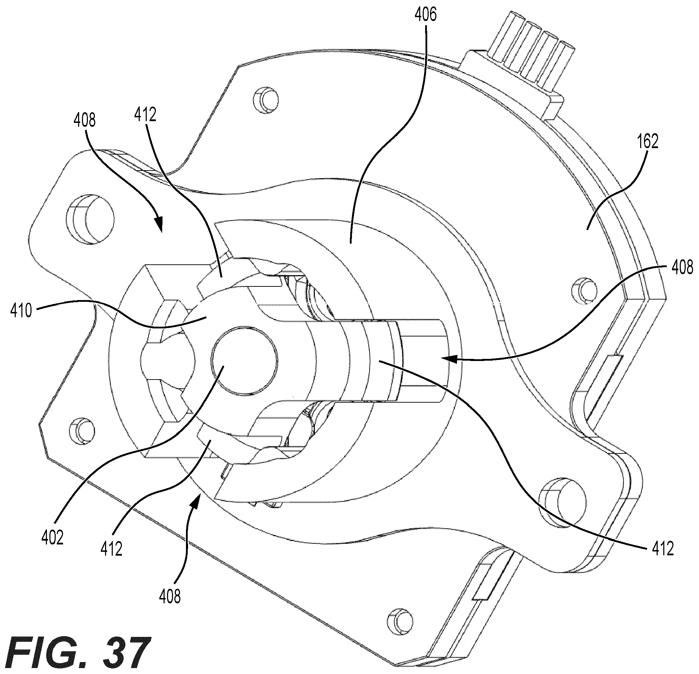

Turning now to Figs. 33 to 45, the shifting assemblies 248, 250 will be described in more detail. The shift assembly 248 together with the gears 246 and its corresponding portion of the countershaft 242 define a shifting and gear assembly. The shift assembly 250 together with the gears 244 and its corresponding portion of the countershaft 242 define another shifting and gear assembly. Embodiments of a shifting and gear assembly where a hollow shaft is provided instead of the countershaft 242 are contemplated. As would be understood, in the present embodiment the hollow shafts of both shifting and gear assemblies are integrally formed as the single countershaft 242. As indicated above, the shifting assembly 248 includes the shift motor 162 and the shifting assembly 250 includes the shift motor 160. As the shifting assemblies 248, 250 are mirror images of each other, the other components of the shifting assemblies 248, 250 will be described with respect to the shift assembly 248. The corresponding components of the shift assembly 250 will be labeled with the same reference numerals in the figures.

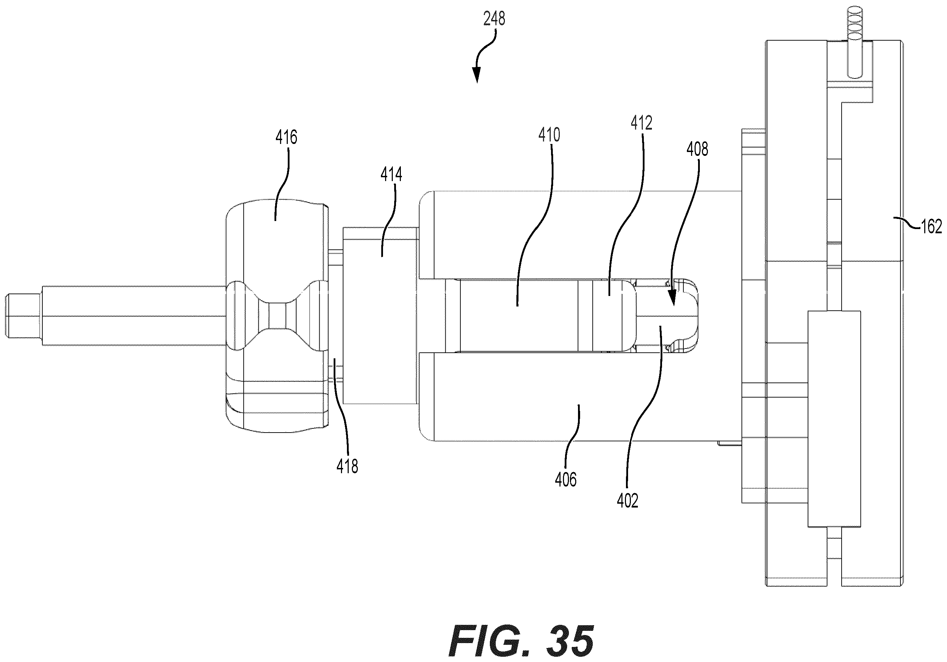

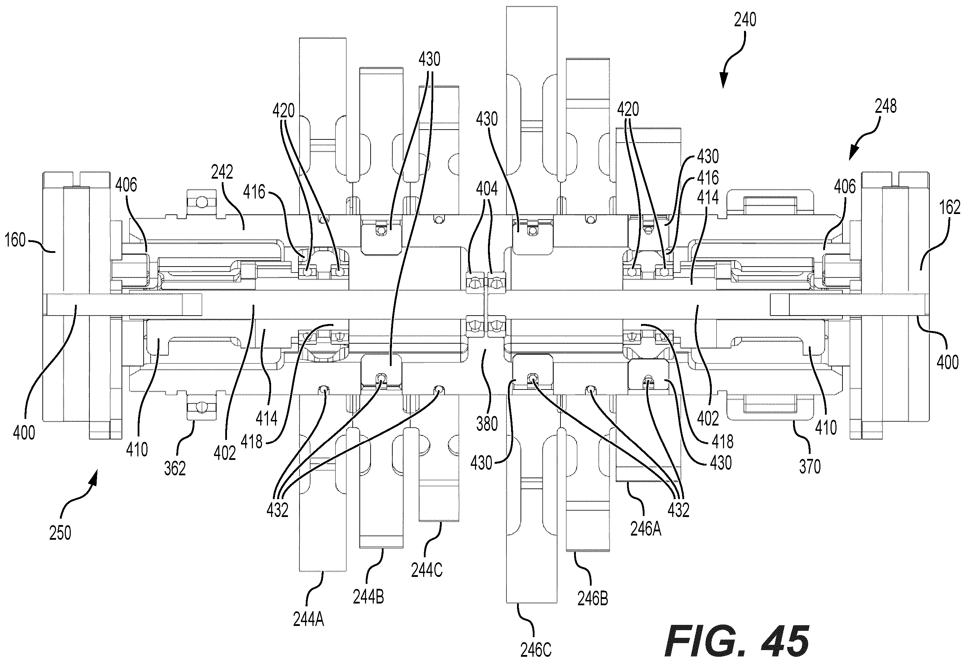

With reference to Fig. 45, the shift motor 162 has a motor shaft 400. A spindle 402 has one end connected to the motor shaft 400 such that the spindle 402 rotates with the motor shaft 400. The opposite end of the spindle 402 is rotationally supported in the flange 380 of the countershaft 242 by a ball bearing 404. The spindle 402 has external threads (not shown). The spindle 402 is coaxial with the countershaft 242. With reference to Figs. 35 to 37, a rail 406 having three slots 408 is connected to the shift motor 162. A slider 410 is disposed over the spindle 402. The slider 410 has three arms 412 received in the three slots 408 of the rail 406. A nut 414 is disposed over the spindle 402 and is connected to the slider 410 so as to be rotationally fixed relative to the slider 410. The nut 414 has internal threads (not shown) that engage the external threads of the spindle 402. As such, when the shift motor 162 rotates the spindle 402, the interaction between the slider 410 and the rail 406 prevent the nut 414 from rotating with the spindle 402, and the nut 414 translates along the spindle 402. The slider 410 translates with the nut 414 and the arms 412 of the slider 410 slide inside the slots 408 of the rail 406. In an alternative embodiment, the end of the spindle 402 is connected to a sprocket, and the sprocket is driven by the shift motor 162 via a flexible drive member.

Returning to Fig. 45, a cam 416 is rotationally supported on a sleeve portion 418 of the nut 414 by a pair of ball bearings 420. The cam 416 has a pair of ribs 422 (Fig. 41) received in the axially extending grooves 382 of the countershaft 242. As such, rotation of the spindle 402 by the shift motor 162 causes the nut 414 to translate as described above, the cam 416 translates with the nut 414 inside the countershaft 242, and cam 416 rotates together with the countershaft 242. The cam 416 will be described in more detail below.

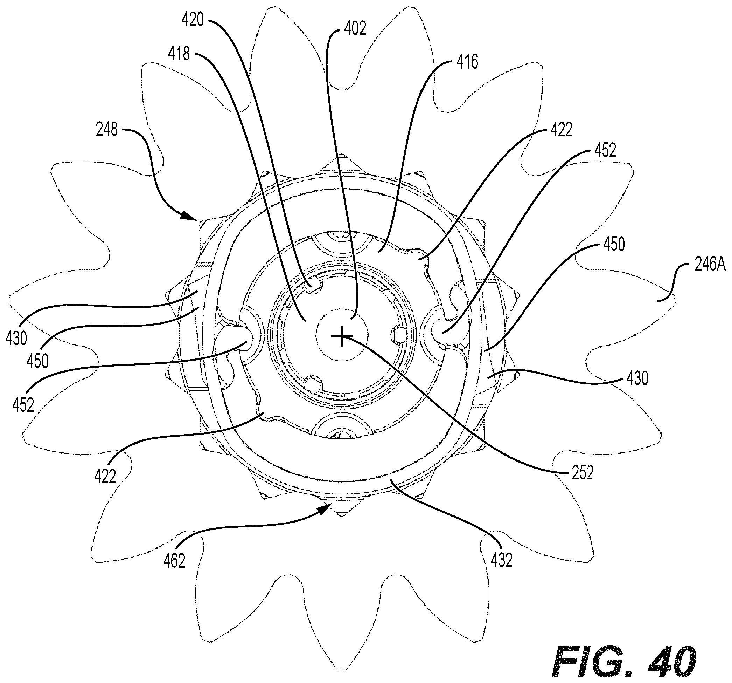

Each aperture 374 and its corresponding recesses 376 of the countershaft 242 receives a cam follower 430 therein. As such, each gear 246 has a pair of cam followers 430 axially aligned therewith. In the present embodiment, the cam followers 430 are shift pawls 430 which will be described in more detail below. A spring ring 432 is received in each circumferential groove 378. As such, as can be seen in Fig. 40 for one spring ring 432, each spring ring 432 is disposed around the countershaft 242 and in axial alignment with its corresponding gear 246 and pair of shift pawls 430. The spring rings 432 bias the shift pawls 430 radially inward.

In response to the cam 416 being translated by the shift motor 162 to be axially aligned with one of the pairs of shift pawls 430, the cam 416 displaces the shift pawls 430 radially outward to engage the corresponding gear 426 so as to rotationally fix this gear 426 to the countershaft 242. For example, in Fig. 45 the cam 416 is axially aligned with the pair of shift pawls 430 that are closest to the shift motor 162, and these shift pawls 430 are displaced radially outward to engage the gear 426A. When the cam 416 is translated so as to no longer be axially aligned with a pair of shift pawls 430, the spring ring 432 corresponding to these shift pawls 430 displaces the shift pawls 430 radially inward to disengage the corresponding gear 426 such that this gear 426 can once again rotate relative to the countershaft 242. Only one of the gears 426 is engaged and rotationally fixed to the countershaft 242 at a time.

The TCU 144 controls the electric shift motors 160, 162 based on the signals received from the shifter 32, the speed sensor 154 and the torque sensor 156. As such the TCU 144 controls the positions of the cams 416 of the shift assemblies 348, 250 by controlling the shift motors 162, 160. By axially aligning the cams 416 with different gears 244, 246 on the countershaft 242 so as to rotationally fix them to the countershaft 242 with the shift pawls 430, different gear ratios between the input shaft 232 and output shaft 114 can be obtained. As previously mentioned, the transmission 102 has nine possible gear ratios, or gears, between the input shaft 232 and the output shaft 114. The first to ninth gear sequentially provide higher and higher gear ratios (output shaft speed to input shaft speed). Accordingly, the first gear is the lowest gear and the ninth gear is the highest gear.

Fig. 45 illustrates the cams 416 in their positions corresponding to the first gear. In the first gear, the cam 416 of the shift assembly 250 is aligned with the gear 244A and the cam 416 of the shift assembly 248 is aligned with the gear 246A. As such, the shift pawls 430 axially aligned with the gears 244A and 246A engage these gears and rotationally fix these gears to the countershaft 242. In the first gear, torque applied to the input shaft 234 from the crankshaft 108 and/or the electric motor 104 is transmitted to the gear 236A, from the gear 236A to the gear 244A, from the gear 244A to the countershaft 242, from the countershaft 242 to the gear 246A, from the gear 246A to the gear 262A, from the gear 262A to the output shaft 114, and from the output shaft 114 to the drive sprocket 116. From the drive sprocket 116, torque is transmitted to the rear wheel 62 via the chain 120 and driven sprocket 118 as described above.

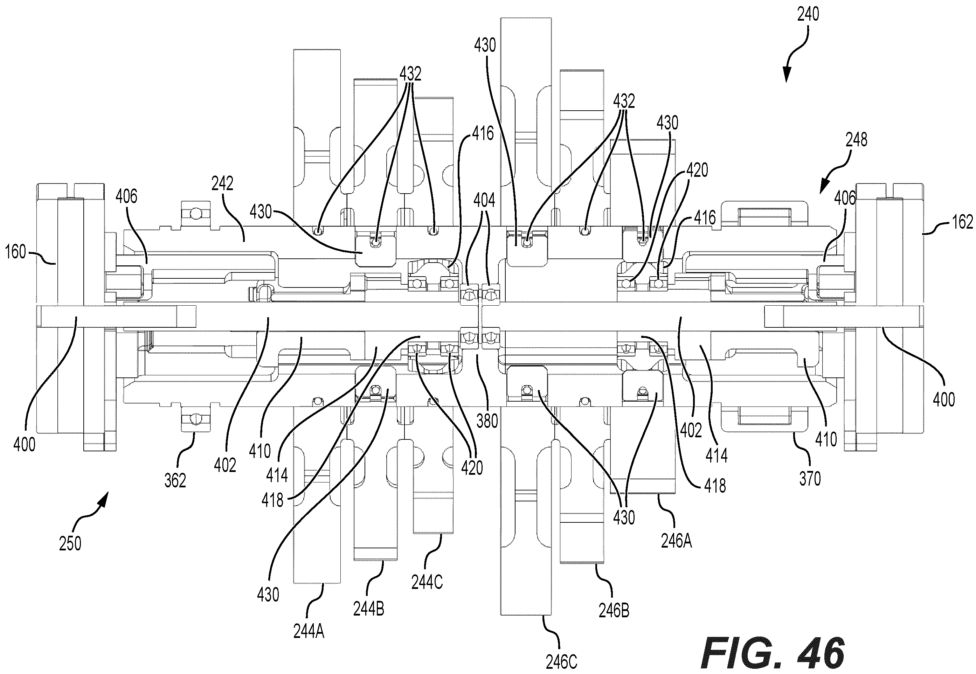

Fig. 46 illustrates the cams 416 in their positions corresponding to the third gear. In the third gear, the cam 416 of the shift assembly 250 is aligned with the gear 244C and the cam 416 of the shift assembly 248 is aligned with the gear 246A. As such, the shift pawls 430 axially aligned with the gears 244C and 246A engage these gears and rotationally fix these gears to the countershaft 242. In the third gear, torque applied to the input shaft 234 from the crankshaft 108 and/or the electric motor 104 is transmitted to the gear 236C, from the gear 236C to the gear 244C, from the gear 244C to the countershaft 242, from the countershaft 242 to the gear 246A, from the gear 246A to the gear 262A, from the gear 262A to the output shaft 114, and from the output shaft 114 to the drive sprocket 116. From the drive sprocket 116, torque is transmitted to the rear wheel 62 via the chain 120 and driven sprocket 118 as described above.

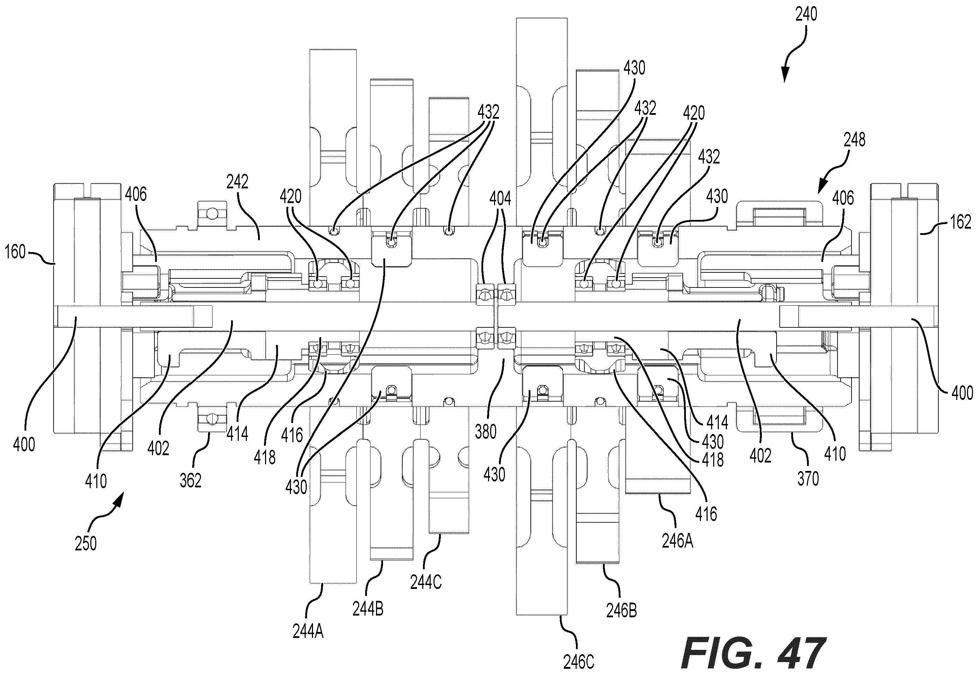

Fig. 47 illustrates the cams 416 in their positions corresponding to the fourth gear. In the fourth gear, the cam 416 of the shift assembly 250 is aligned with the gear 244A and the cam 416 of the shift assembly 248 is aligned with the gear 246B. As such, the shift pawls 430 axially aligned with the gears 244A and 246B engage these gears and rotationally fix these gears to the countershaft 242. In the fourth gear, torque applied to the input shaft 234 from the crankshaft 108 and/or the electric motor 104 is transmitted to the gear 236A, from the gear 236A to the gear 244A, from the gear 244A to the countershaft 242, from the countershaft 242 to the gear 246B, from the gear 246B to the gear 262B, from the gear 262B to the output shaft 114, and from the output shaft 114 to the drive sprocket 116. From the drive sprocket 116, torque is transmitted to the rear wheel 62 via the chain 120 and driven sprocket 118 as described above.

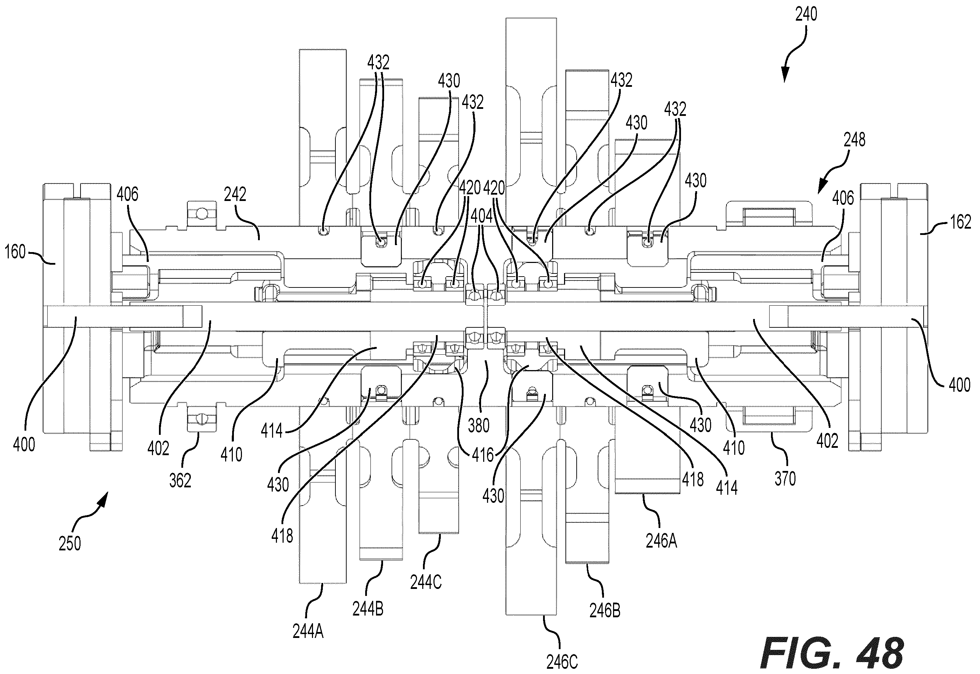

Fig. 48 illustrates the cams 416 in their positions corresponding to the ninth gear. In the ninth gear, the cam 416 of the shift assembly 250 is aligned with the gear 244C and the cam 416 of the shift assembly 248 is aligned with the gear 246C. As such, the shift pawls 430 axially aligned with the gears 244C and 246C engage these gears and rotationally fix these gears to the countershaft 242. In the ninth gear, torque applied to the input shaft 234 from the crankshaft 108 and/or the electric motor 104 is transmitted to the gear 236C, from the gear 236C to the gear 244C, from the gear 244C to the countershaft 242, from the countershaft 242 to the gear 246C, from the gear 246C to the gear 262C, from the gear 262C to the output shaft 114, and from the output shaft 114 to the drive sprocket 116. From the drive sprocket 116, torque is transmitted to the rear wheel 62 via the chain 120 and driven sprocket 118 as described above.

Although not illustrated as in Figs. 45 to 48, in the second gear the cams 416 are aligned with the gears 244B and 246A and torque is transmitted via the gears 236B, 244B, 246A and 262A. In the fifth gear the cams 416 are aligned with the gears 244B and 246B and torque is transmitted via the gears 236B, 244B, 246B and 262B. In the sixth gear the cams 416 are aligned with the gears 244C and 246B and torque is transmitted via the gears 236C, 244C, 246B and 262B. In the seventh gear the cams 416 are aligned with the gears 244A and 246C and torque is transmitted via the gears 236A, 244A, 246C and 262C. In the eighth gear the cams 416 are aligned with the gears 244B and 246C and torque is transmitted via the gears 236B, 244B, 246C and 262C.

Each actuation, or clicking, of the shifter 32 in one direction cause the next gear (i.e. gear ratio) in the sequence up or down to be selected depending on the direction of the actuation of the shifter 32. The above described arrangement can also allow the TCU 144 to be programmed so as to provide non-sequential shifting. For example, a double-click or long click the shifter 32 could cause a shifting by two gears (3^{rd} to 5^{th} for example) or return to first gear regardless of the currently selected gear. This arrangement also allows shifting to occur even when the pedelec 10 is standing still as shifting is caused by the electric shifting motor 160, 162. As such, it is contemplated that the TCU 144 could control the shifting motors 160, 162 to automatically return the transmission 102 to the first gear when the speed of the pedelec 10 is zero. It is also contemplated that the pedelec 10 could be provided with a level sensor, such that when the speed of the pedelec 10 is zero and the level sensor detects that the pedelec 10 is pointing in a downhill direction, the TCU 144 could control the shifting motors 160, 162 to automatically return the transmission 102 to a gear higher than the first gear, such as the fourth gear for example. In such an embodiment, it is contemplated that the gear that is being selected could depend on the inclination detected by the level sensor, with higher gears being automatically selected for higher downhill inclinations. It is also contemplated that the TCU 144 could be programmed to automatically shift to a more suitable gear based on the sensed pedaling cadence and/or torque sensed by the torque sensor 156 should the biker not properly shift to match the current operating condition of the pedelec 10.

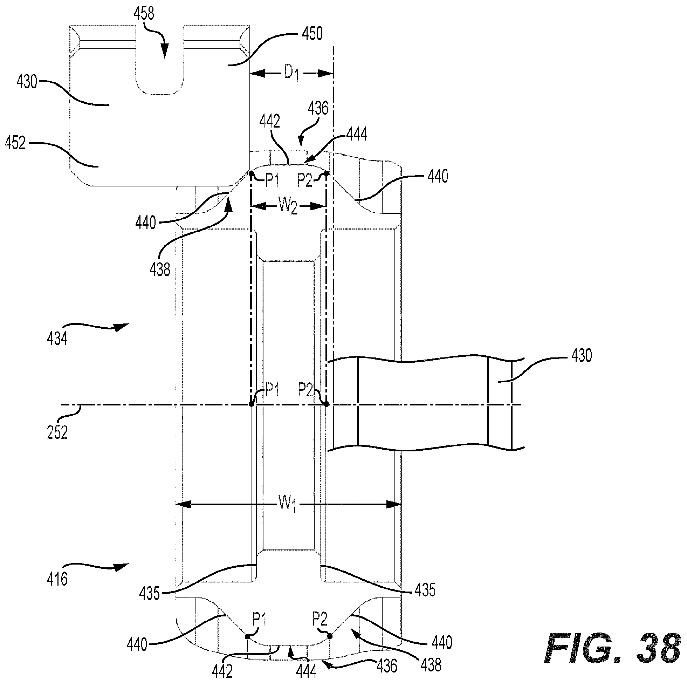

Turning now to Figs. 38 to 42, one of the cams 416 will be described in more detail. As both cams 416 are identical, the description of this cam 416 also applies to the other cam 416. The cam 416 has a central aperture 434 with two shoulders 435 to receive the spindle 402 and bearings 420 therein. With reference to Fig. 38, the cam 416 has a cam width W₁. The distance D₁ measured in the direction parallel to the axis 252 between two consecutive sets of shift pawls 430 is less than or equal to 0.4 times the cam width W₁.

The cam 416 also has four pinched regions 436 along its outer periphery. The pinched regions 436 are disposed at 90 degrees from each other. These pinched regions 436 are circumferentially aligned with the shift pawls 430 and their corresponding apertures 374. Each pinched region 436 defines a cam contact surface 438 that comes in contact with its corresponding shift pawls 430 to displace the shift pawls 430 radially outward. Each cam contact surface 438 has two ramps 440 disposed on opposite sides thereof and a plateau 442 extending between the top of the ramps 440 as best seen in Fig. 38. Each cam contact surface 438 has a minimum cam contact surface 444. The minimum cam contact surface 444 is defined herein as the portion of the cam contact surface 438 disposed between the first/last points P₁, P₂ of the cam contact surface 438 to make contact with the shift pawls 430 as the cam 416 is being translated. In the case where surfaces of the cam contact surfaces 438 are the first/last to make contact with the shift pawls 430 as is the case in the present embodiment with the upper portions of the ramps 440, the points P₁, P₂ are the points of these surfaces that are closest to the center of the cam contact surface 438 is a direction parallel to the axis 252. The minimum cam contact surface 444 has a width W₂ as shown in Fig. 38. In the present embodiment, the distance D₁ between two consecutive shift pawls 430 is less than or equal to 1.1 times the width W₂ of the minimum cam contact surface 444. Since the difference between distance D₁ relative to the width W₂ is small, the time taken to move the cam 416 from one shift pawl 430 to the next shift pawl 430 is short, and therefore the time taken to disengage one gear 244 or 246 and engage an adjacent gear 244 or 246 is also short, which allows for quick shifting of the gears. It is contemplated that in some embodiments, the cams 416 could be different from the cams 416 described above.

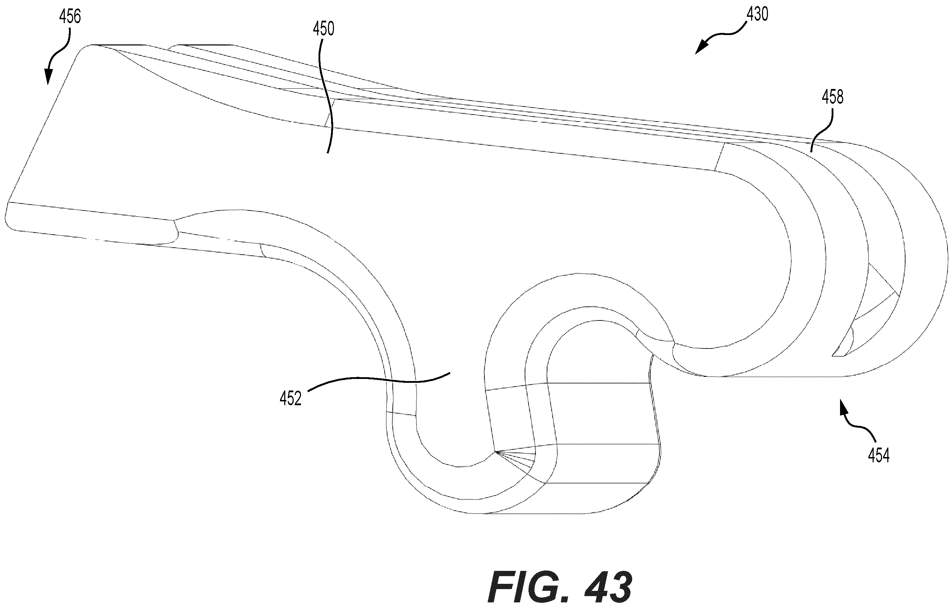

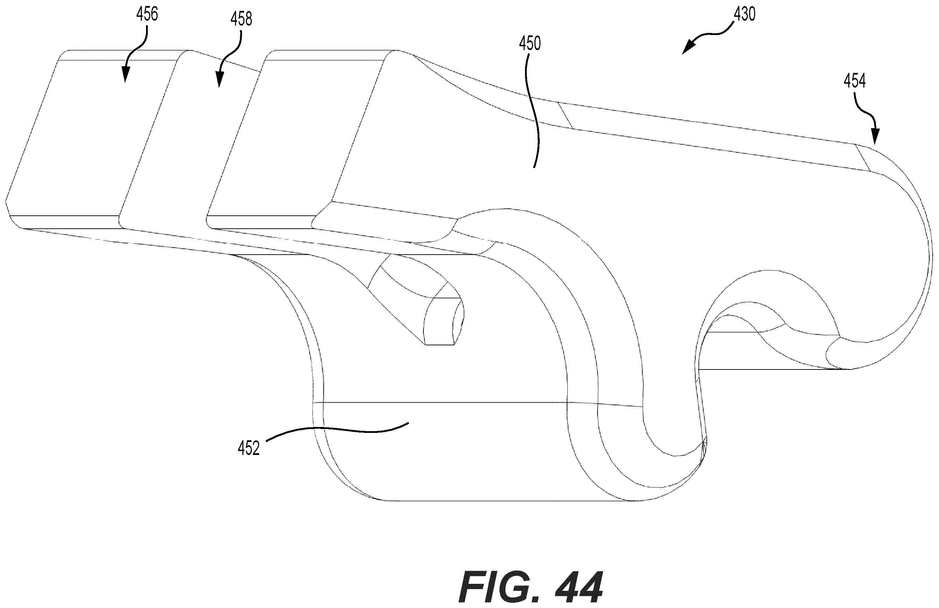

With reference to Figs. 43 and 44, the shift pawls 430 will be described in more detail. As all of the shift pawls 430 are identical, only one shift pawl 430 will be described. The shift pawl 430 has a body 450 and a finger 452. The body 450 has a rounded end 454 and a flat end 456. The flat end 456 is angled for reasons described further below. The body 450 defines a groove 458 on a radially outer side thereof that extends an entire length of the body 450 and splits the flat end 456 in two. As can be seen in Figs. 34 and 40, the groove 458 receives therein the spring ring 432 associated with the shift pawl 430. The finger 452 extends from the body 450 between the ends 454, 456 and extends away from the body 450 and toward the rounded end 454 at an acute angle. As can be seen, most corners of the body 450 and the finger 452 are beveled.

As shown for the shift pawls 430 in Fig. 40 and on the left side of Fig. 41, when the shift pawl 430 is not engaged by the cam 416 (i.e. the cam 416 is not axially aligned with the shift pawl 430), the finger 452 is received in its corresponding aperture 374 in the countershaft 242, the rounded end 454 is received in its corresponding recess 376A and the flat end 456 is received in its corresponding recess 376B. As can be seen, in this position the finger 452 protrudes from the inner surface of the countershaft 242.

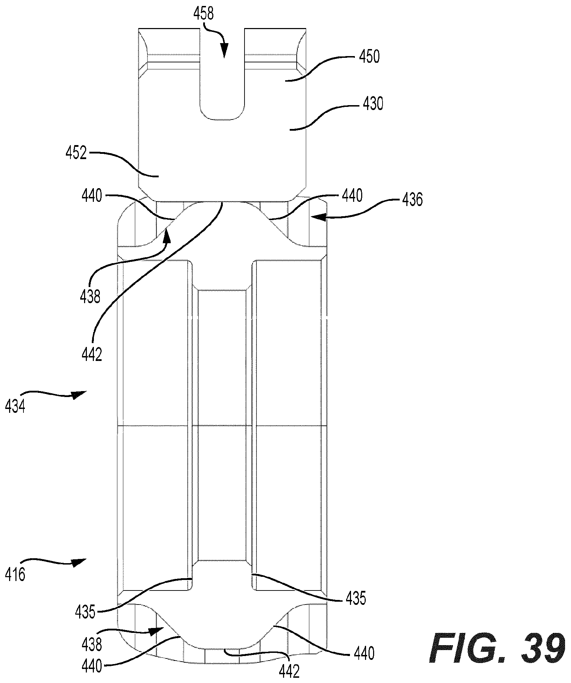

When the cam 416 is translated to axially align with the shift pawl 430, as can be seen by comparing Figs. 38 and 39, the cam contact surface 438 of the cam 416 abuts the end of the finger 452 and displaces the finger 452, and therefore the shift pawl 430, radially outward. More specifically, as shown for the shift pawls 430 on the right side of Fig. 41, in response to the cam 416 aligning with the shift pawl 430, the cam 416 pushes the finger 452 of the shift pawl 430 radially outward such that the body 450 of the shift pawl 430 pivots about a pivot axis 460 defined in its rounded end 454 in the recess 376A such that the flat end 456 pivots outwardly.

It should be understood that in Fig. 41 the shift pawls 430 on the left and right sides of these figures have been shown in different positions for the sake of the above explanations, but that in reality, since these shift pawls 430 are opposite to each other, they have the same position as they are simultaneously engaged or disengaged by the cam 416.

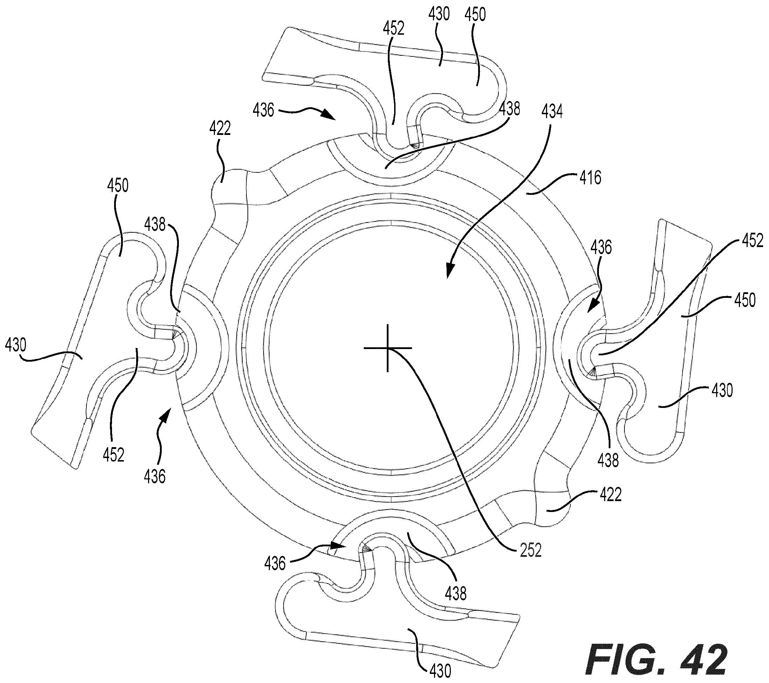

Similarly, Fig. 42 shows four shift pawls 430 at different stages of engagement, but it should be understood that in reality the shift pawls 430 on the left and right sides of this figure have the same position, the shift pawls 430 on the top and bottom sides of this figure have the same position. Also, when the left and right shift pawls 430 are engaged, the top and bottom shift pawls 430 are disengaged, and when the top and bottom shift pawls 430 are engaged, the left and right shift pawls 430 are disengaged.

Returning to Figs. 40 and 41, it can be seen that the gear 246A has a plurality of internal teeth 462. All of the gears 244, 246 have internal teeth 462 like those of the gear 246A. In the present embodiment, the teeth 462 are triangular but other shapes are contemplated. As can be seen on the right sides of Fig. 41, when the cam 416 displaces the finger 452 radially outward such that the body 450 pivots, the flat end 456 shift pawl abuts one of the internal teeth 462 of the gear 246A to rotationally fix the gear 246A to the countershaft 242. Both opposed shift pawls 430 abut the internal teeth 462 to rotationally fix the gear 246A to the countershaft 242. As can be seen the angle of the flat end 456 matches the angle of the tooth 462 it engages. The angles of the flat end 456 and the teeth 462 are selected such that a force vector F (Fig. 41) corresponding to the force applied by the tooth 462 on the flat end 456 extends radially inward of the pivot axis 460. When the cam 416 translates away from the shift pawl 430, this force vector F creates a moment about the pivot axis 460 which assists in pivoting the flat end 456 back in the recess 376B. As a result of this force vector F, the shift pawl 430 pivots back to its disengaged position faster than if only the spring ring 432 was biasing the shift pawl 430 radially inward and also allows the shift pawl 430 to disengage even when under load by its corresponding gear 246A. All of the gears 244, 246 are similarly engaged and disengaged by their corresponding shift pawls 430 in response to their corresponding cam 416 being aligned or not with the shift pawls 430.

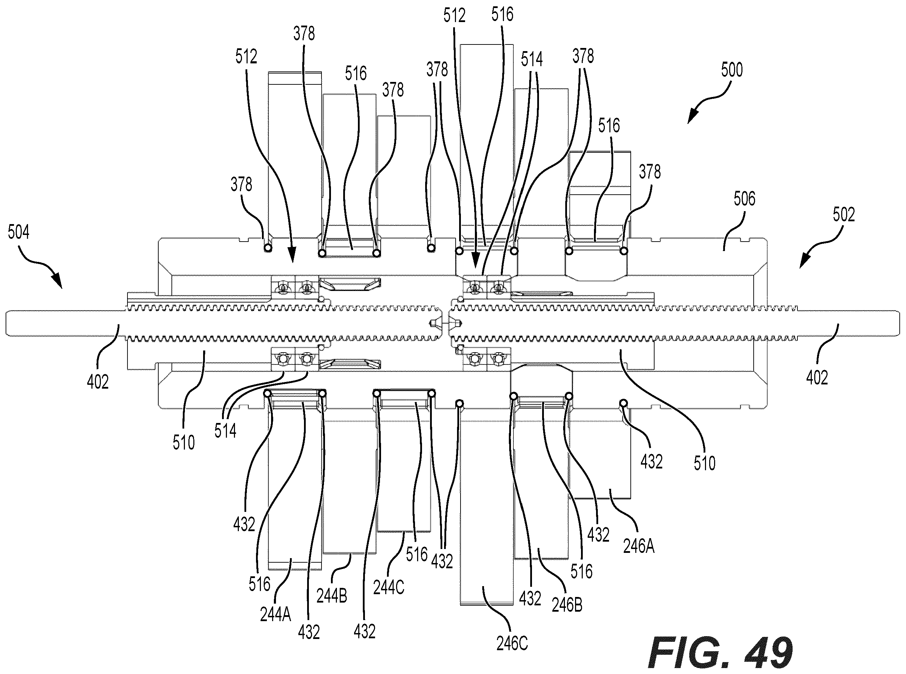

Turning now to Figs. 49 to 54, a countershaft assembly 500, which is an alternative embodiment of the countershaft assembly 240, and shift assemblies 502, 504, which are alternative embodiments of the shift assemblies 248, 250 respectively, will described. For simplicity, elements of the countershaft assembly 500 and of the shift assemblies 502, 504 that are the same as or similar to those of the countershaft assembly 240 and the shift assemblies 248, 250 have been labeled with the same reference numerals and will not be described again in detail

The countershaft assembly 500 includes a countershaft 506, the three gears 244A, 244B, 244C and the three gears 246A, 246B, 246C. The countershaft 506 is hollow. As in the above-described embodiment, portions of the left and right shift assemblies 502, 504 are received inside the countershaft 506.

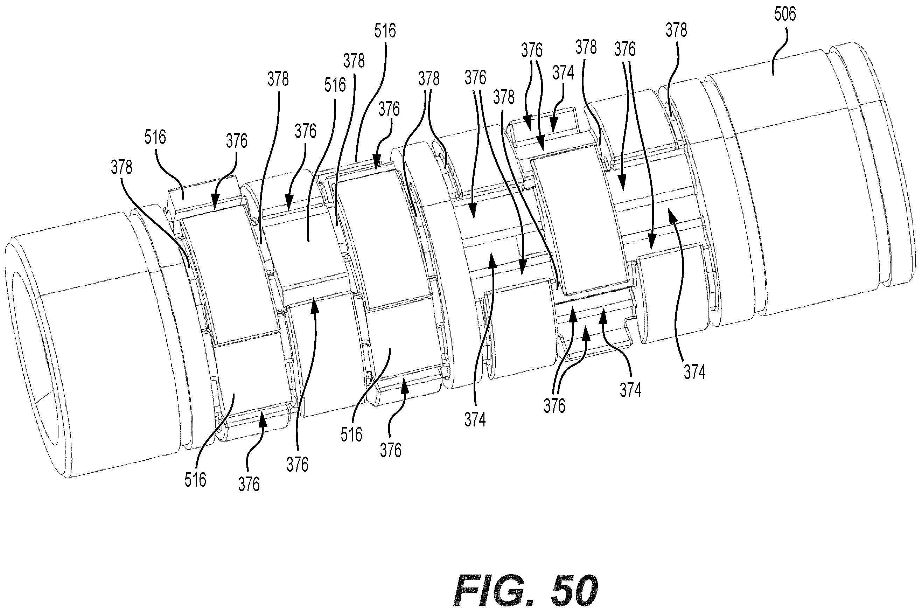

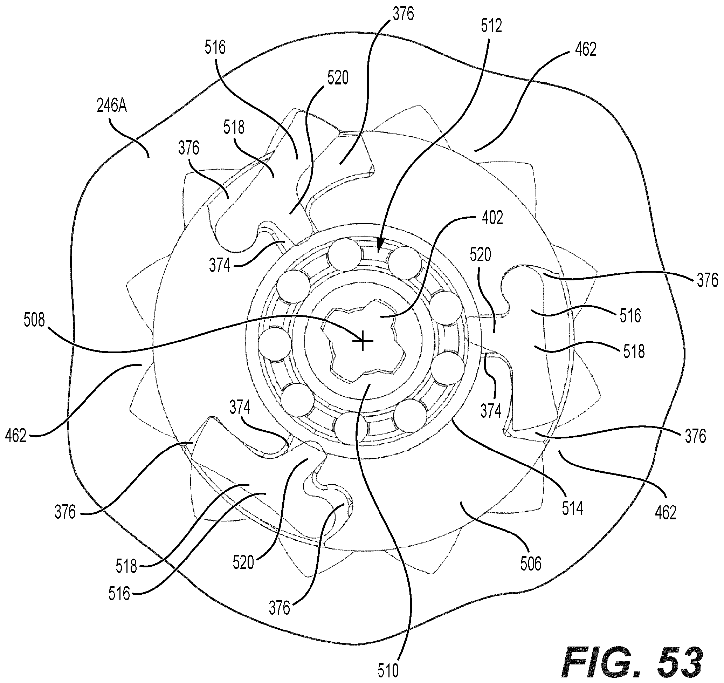

With reference to Fig. 50, the countershaft defines six trios of apertures 374. Each trio of apertures 374 is axially aligned with a corresponding one of the gears 244, 246. For each trio of apertures 374, the three apertures 374 are disposed at 120 degrees from each other about the central axis 508 (Fig. 53) of the countershaft 506. For the apertures 374 aligned with the gears 244, each trio of apertures 374 is disposed at 60 degrees from the trio of apertures 374 that is next to it. Similarly, for the apertures 374 aligned with the gears 246, each trio of apertures 374 is disposed at 60 degrees from the trio of apertures 374 that is next to it. The apertures 374 aligned with the gears 244 are rotationally offset from the apertures 374 aligned with the gears 246. Like the countershaft 242, for each aperture 374, the countershaft 506 defines two recesses 376 in an outer surface thereof disposed adjacent to the aperture 374 on either side thereof. The countershaft 506 defines eight circumferential grooves 378 as shown. Unlike the countershaft 242, the countershaft 506 does not have an internal flange 380 and does not have axially extending grooves 382.

With reference to Fig. 49, the shifting assemblies 502, 504 will be described in more detail. The shift assembly 502 together with the gears 246 and its corresponding portion of the countershaft 506 define a shifting and gear assembly. The shift assembly 504 together with the gears 244 and its corresponding portion of the countershaft 242 define another shifting and gear assembly. Embodiments of a shifting and gear assembly where a hollow shaft is provided instead of the countershaft 506 are contemplated. As would be understood, in the present embodiment the hollow shafts of both shifting and gear assemblies are integrally formed as the single countershaft 506. Although not shown, the shifting assembly 502 includes the shift motor 162 and the shifting assembly 504 includes the shift motor 160. As the shifting assemblies 502, 504 are mirror images of each other, the other components of the shifting assemblies 502, 504 will be described with respect to the shift assembly 502. The corresponding components of the shift assembly 504 will be labeled with the same reference numerals in the figures.

The spindle 402 has one end connected to and driven by the shift motor 162. The opposite end of the spindle 402 is free. A rail having three slot (not shown, but similar to the rail 406) is connected to the shift motor 162. A slider 510 is disposed over the spindle 402. The slider 510 has three arms received in the three slots of the rail. The slider 510 has internal threads that engage the external threads of the spindle 402. As such, when the shift motor 162 rotates the spindle 402, the interaction between the slider 510 and the rail prevent the slider 510 from rotating with the spindle 402, and the slider 510 translates along the spindle 402. As the slider 510 translates, the arms of the slider 510 slide inside the slots of the rail. In this embodiment, since the slider 510 has internal threads, a separate nut, such as the nut 414 described above, does not need to be attached to the slider 510.

A cam 512 is supported on an end portion of the slider 510. The cam 512 is defined by a pair of bearings 514. As such, rotation of the spindle 402 by the shift motor 162 causes the slider 510 to translate as described above and the cam 512 translates with the slider inside the countershaft 506.

Each aperture 374 and its corresponding recesses 376 of the countershaft 506 receives a cam follower 516 therein, some of which are shown in Fig. 50. As such, each gear 246 has three cam followers 516 axially aligned therewith. In the present embodiment, the cam followers 516 are shift pawls 516 which will be described in more detail below. A spring ring 432 is received in each circumferential groove 378. Each shift pawl 516 is biased radially inward by two of the spring rings 432.

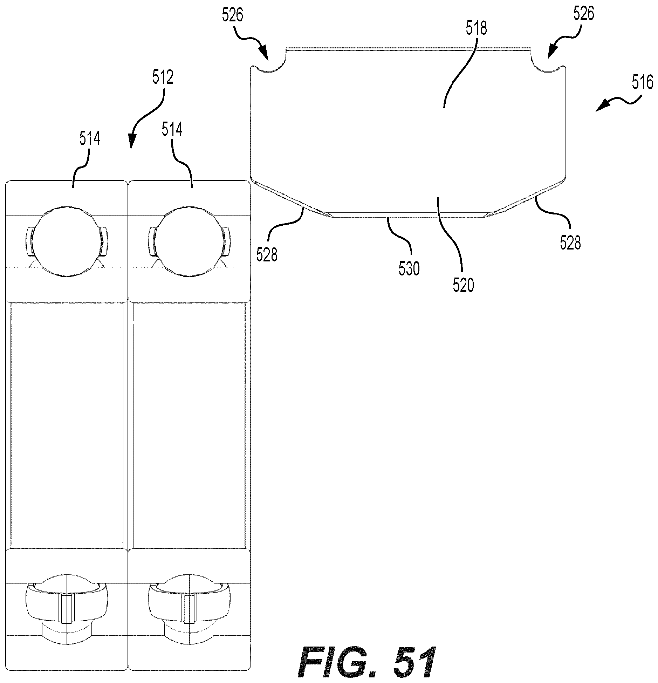

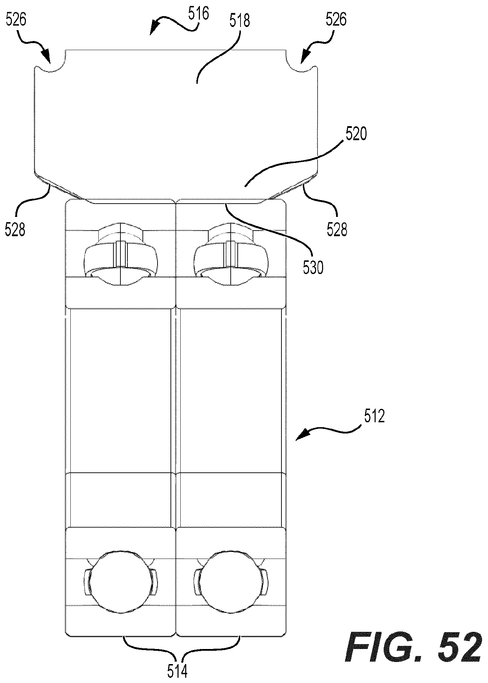

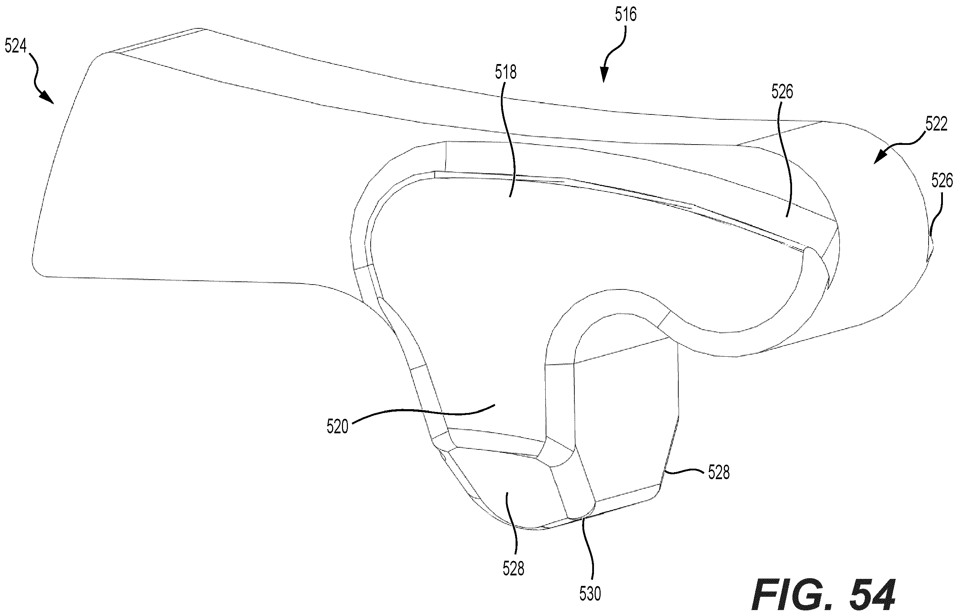

With reference to Fig. 54, the shift pawls 516 will be described in more detail. As all of the shift pawls 516 are identical, only one shift pawl 516 will be described. As can be seen, the lateral profile of the shift pawl 516 is similar in shape to the lateral profile of the shift pawl 430, but the shift pawl 516 is wider than the shift pawl 430. The shift pawl 516 has a body 518 and a finger 520. The body 518 has a rounded end 522 and an arcuate end 524. The arcuate end 522 is angled for the same reasons as the flat end 456 of the shift pawl 430. As best seen in Figs. 51, 52, the body 518 defines left and right grooves 526 on a radially outer side thereof.

The grooves 526 receive therein the spring rings 432 associated with the shift pawl 516. One spring ring 432 is received in the left grooves 526 of the shift pawls 516 aligned with the gear 246A. One spring ring 432 is received in the right grooves 526 of the shift pawls 516 aligned with the gear 246A and in the left grooves 526 of the shift pawls 516 aligned with the gear 246B. One spring ring 432 is received in the right grooves 526 of the shift pawls 516 aligned with the gear 246B and in the left grooves 526 of the shift pawls 516 aligned with the gear 246C. One spring ring 432 is received in the right grooves 526 of the shift pawls 516 aligned with the gear 246C.

Returning to Fig. 54, the finger 520 extends from the body 518 between the ends 522, 524 and extends away from the body 518 and toward the rounded end 522 at an acute angle. The finger 520 has a pair of beveled surfaces 528 and a lower flat surface 530 between the beveled surfaces 528.

When the cam 512 is translated to axially align with the shift pawl 516, as can be seen by comparing Figs. 51 and 52, the corner of an outer race of one of the bearings 514 abuts one of the beveled surfaces 528 of the finger 520 and displaces the finger 520, and therefore the shift pawl 516, radially outward to engage the corresponding gear 246 in a manner similar to the one described above for the pawls 430. As the cam 512 continues to translate, the lower flat surface 530 of the finger 520 sits, first on the outer race of one of the bearings 514, and then of both of the bearings 514 as shown in Fig. 52. As the cam 512 translates past the lower flat surface 530 of the finger 520, the outer race of the other one of the bearings 514 abuts the other one of the beveled surfaces 528 of the finger 520 and, as the cam 512 continues to translate, the spring rings 432 and the force applied on the shift pawl 516 by the corresponding gear 246 displace the finger 520, and therefore the shift pawl 516, radially inward to disengage the corresponding gear 246 in a manner similar to the one described above for the pawls 430. However, the geometry of the shift pawl 516 and the fact that it is being biased by two spring rings 432 make it more easily disengaged than the shift pawl 430.

In Fig. 53, the pawl 516 disposed above and to the left of the axis 508 is shown in an engaged position (i.e. the surface 530 of finger 520 abuts the cam 512), the pawl 516 disposed below and to the left of the axis 508 is shown in partially engaged position (i.e. one of the beveled surfaces 528 of the finger 520 abuts the cam 512), and the pawl 516 disposed to the right of the axis 508 is shown in a disengaged position (i.e. the finger 520 does not abut the cam 512). It should be understood that in Fig. 53 the shift pawls 516 have been shown in different positions for the sake of the above explanations, but that in reality, since these shift pawls 516 are axially aligned with each other, they have the same position as they are simultaneously engaged or disengaged by the cam 512.

## Claims

1. A powertrain (100) for an electric bicycle comprising:
an electric motor (104);
a motor gear (226) operatively connected to and driven by the electric motor (104);
a crankshaft (108) adapted for connecting to crank arms (110) of the bicycle;
an input shaft (232) having a first end portion and a second end portion, the second end portion being operatively connected to and driven by the crankshaft (108);
an input gear (234) connected to the first end portion of the input shaft, the input gear engaging and being driven by the motor gear (226), the input gear driving the input shaft;
at least one first gear (236) mounted to the input shaft;
an output shaft (114) disposed parallel to the input shaft;
at least one second gear (262) mounted to the output shaft, the at least one second gear being driven by the at least one first gear (236);
a drive sprocket (116) connected to and driven by the output shaft; and
a torque sensor (156) disposed between the second end portion of the input shaft and the at least one first gear in a direction defined by a central axis of the input shaft for sensing torque applied to the input shaft,
the electric motor being controlled based at least in part on torque sensed by the torque sensor.

2. The powertrain (100) of claim 1, wherein: The input shaft (232) has a circumferentially recessed portion (334); and the torque sensor (156) is aligned with the recessed portion (334).

3. The powertrain of claim 1, wherein the torque sensor (156) is a contactless strain gauge.

4. The powertrain of claim 1, wherein the crankshaft (108) extends through the input shaft (232).

5. The powertrain of claim 4, further comprising a clutch (324) connecting the crankshaft (108) to the input shaft (232), the torque sensor (156) being disposed between the clutch (324) and the at least one first gear (236) in the direction defined by the central axis (252).

6. The powertrain of claim 5, further comprising a bearing (272) rotationally connected between the input shaft (232) and the crankshaft (108), the torque sensor (156) being disposed between the clutch (324) and the bearing (272) in the direction defined by the central axis (252).

7. The powertrain of claim 5, wherein the clutch (324) is a second clutch (324); and further comprising a first clutch (328) connecting the input gear (234) to the input shaft (232).

8. The powertrain of claim 7, wherein the first clutch (328) is a sprag clutch.

9. The powertrain of claim 7, wherein:
the first clutch (328) is disposed at the first end portion of the input shaft (232); and the second clutch (324) is disposed at the second end portion of the input shaft (232).

10. The power train of claim 1, further comprising:
a countershaft (242) disposed parallel to the input shaft (232); at least one third gear (242) mounted to the countershaft (242), the at least one third gear (244) engaging and being driven by the at least one first gear (236); at least one fourth gear (246) mounted to the countershaft (242), the at least one second gear (262) engaging and being driven by the at least one fourth gear (246).

11. The powertrain of claim 10, wherein:
the at least one first gear (236) is a plurality of first gears (236A..C) rotationally fixed relative to the input shaft (232);
the at least one third gear (242) is a plurality of third gears (244A...C), each of the plurality of third gears (232) engaging and being driven by a corresponding first (236) of the plurality of first gears (236A..C) each third gear (244A..C) of the plurality of third gears (244A..C) being selectively rotationally fixed to the countershaft (242) to drive the countershaft (242); and
further comprising a shift assembly (250) for selectively rotationally fixing any one third gear (244A..C) of the plurality of third gears (244A..C) to the countershaft (242).

12. The powertrain of claim 11, wherein: the shift assembly (248) is a first shift assembly (248); the at least one second gear (262) is a plurality of second gears (262A..C) rotationally fixed relative to the output shaft (114); the at least one fourth gear (246A..C) is a plurality of fourth gears (246A..C), each of the plurality of second gears (262A..C) engaging and being driven by a corresponding fourth gear (246A..C) of the plurality of fourth gears (246A..C), each fourth gear (246A..C) of the plurality of fourth gears (246A..C) being selectively rotationally fixed to the countershaft (242) to drive the output shaft (114); and further comprising a second shift assembly (250) for selectively rotationally fixing any one fourth gear (246A..C) of the plurality of fourth gears (246A..C) to the countershaft (242).

13. The powertrain of claim 10, wherein: the at least one second gear (262) is a plurality of second gears (262A..C) rotationally fixed relative to the output shaft (114); the at least one fourth gear (246) is a plurality of fourth gears (246A..C), each of the plurality of second gears (262A..C) engaging and being driven by a corresponding fourth gear (246A..C) of the plurality of fourth gears (246A..C), each fourth gear (246A..C) of the plurality of fourth gears (246A..C) being selectively rotationally fixed to the countershaft (242) to drive the output shaft (114); and further comprising a shift assembly (248) for selectively rotationally fixing any one fourth gear (246A..C) of the plurality of fourth gears (246A..C) to the countershaft (242).

14. An electric bicycle comprising:
a frame (12); a handlebar (26) operatively connected to the frame (12); a front wheel (38) operatively connected to the handlebar (26); a rear wheel (62) operatively connected to the frame (12); a driven sprocket (118) connected to the rear wheel (62) to drive the rear wheel (62); the powertrain (100) of any one of claims 1 to 13 operatively connected to the frame (12); a flexible drive member (120) engaging the drive and driven sprockets (116); a pair of crank arms (110) connected to the crankshaft (108); and a battery pack (130) connected to the frame (12) and electrically connected to the electric motor (104).

15. The electric bicycle of claim 14, wherein the electric bicycle is a pedelec (10); and further comprising a shifter (32) connected to the handlebar (26), the shift assembly (248) being controlled in response to actuation of the shifter (32).

## Patentansprüche

1. Antriebsstrang (100) für ein Elektrofahrrad, umfassend:
einen Elektromotor (104);
ein Motorzahnrad (226), das mit dem Elektromotor (104) wirkverbunden ist und durch diesen angetrieben wird;
eine Kurbelwelle (108), die zum Verbinden mit den Kurbelarmen (110) des Fahrrads geeignet ist;
eine Eingangswelle (232) mit einem ersten Endabschnitt und einem zweiten Endabschnitt, wobei der zweite Endabschnitt mit der Kurbelwelle (108) wirkverbunden ist und durch diese angetrieben wird;
ein Eingangszahnrad (234), das mit dem ersten Endabschnitt der Eingangswelle verbunden ist, wobei das Eingangszahnrad mit dem Motorzahnrad (226) in Eingriff steht und durch dieses angetrieben wird, wobei das Eingangszahnrad die Eingangswelle antreibt;
mindestens ein erstes Zahnrad (236), das an der Eingangswelle montiert ist;
eine Ausgangswelle (114), die parallel zur Eingangswelle angeordnet ist;
mindestens ein zweites Zahnrad (262), das an der Ausgangswelle montiert ist, wobei das mindestens eine zweite Zahnrad durch das mindestens eine erste Zahnrad (236) angetrieben wird;
ein Antriebskettenrad (116), das mit der Abtriebswelle verbunden ist und durch diese angetrieben wird; und
einen Drehmomentsensor (156), der zwischen dem zweiten Endabschnitt der Eingangswelle und dem mindestens einen ersten Zahnrad in einer durch eine Mittelachse der Eingangswelle definierten Richtung angeordnet ist, um das auf die Eingangswelle ausgeübte Drehmoment zu erfassen,
wobei der Elektromotor mindestens teilweise auf der Grundlage des durch den Drehmomentsensor erfassten Drehmoments gesteuert wird.

2. Antriebsstrang (100) nach Anspruch 1, wobei:
die Eingangswelle (232) einen umlaufenden vertieften Abschnitt (334) aufweist; und
der Drehmomentsensor (156) auf den vertieften Abschnitt (334) ausgerichtet ist.

3. Antriebsstrang nach Anspruch 1, wobei der Drehmomentsensor (156) ein kontaktloser Dehnungsmessstreifen ist.

4. Antriebsstrang nach Anspruch 1, wobei sich die Kurbelwelle (108) durch die Eingangswelle (232) erstreckt.

5. Antriebsstrang nach Anspruch 4, ferner umfassend eine Kupplung (324), die die Kurbelwelle (108) mit der Eingangswelle (232) verbindet, wobei der Drehmomentsensor (156) zwischen der Kupplung (324) und dem mindestens einen ersten Zahnrad (236) in der durch die Mittelachse (252) definierten Richtung angeordnet ist.

6. Antriebsstrang nach Anspruch 5, ferner umfassend ein Lager (272), das drehend zwischen der Eingangswelle (232) und der Kurbelwelle (108) verbunden ist, wobei der Drehmomentsensor (156) zwischen der Kupplung (324) und dem Lager (272) in der durch die Mittelachse (252) definierten Richtung angeordnet ist.

7. Antriebsstrang nach Anspruch 5, wobei die Kupplung (324) eine zweite Kupplung (324) ist; und
ferner umfassend eine erste Kupplung (328), die das Eingangszahnrad (234) mit der Eingangswelle (232) verbindet.

8. Antriebsstrang nach Anspruch 7, wobei die erste Kupplung (328) eine Freilaufkupplung ist.

9. Antriebsstrang nach Anspruch 7, wobei:
die erste Kupplung (328) am ersten Endabschnitt der Eingangswelle (232) angeordnet ist; und
die zweite Kupplung (324) am zweiten Endabschnitt der Eingangswelle (232) angeordnet ist.

10. Antriebsstrang nach Anspruch 1, ferner umfassend:
eine parallel zur Eingangswelle (232) angeordnete Vorgelegewelle (242);
mindestens ein drittes Zahnrad (242), das an der Vorgelegewelle (242) montiert ist, wobei das mindestens eine dritte Zahnrad (244) mit dem mindestens einen ersten Zahnrad (236) in Eingriff steht und durch dieses angetrieben wird;
mindestens ein viertes Zahnrad (246), das an der Vorgelegewelle (242) montiert ist, wobei das mindestens eine zweite Zahnrad (262) mit dem mindestens einen vierten Zahnrad (262) in Eingriff steht und durch dieses angetrieben wird.

11. Antriebsstrang nach Anspruch 10, wobei:
das mindestens eine erste Zahnrad (236) eine Vielzahl von ersten Zahnrädern (236A...C) ist, die relativ zur Eingangswelle (232) drehfest verbunden sind;
das mindestens eine dritte Zahnrad (242) eine Vielzahl von dritten Zahnrädern (244A...C) ist, wobei jedes der Vielzahl von dritten Zahnrädern (232) mit einem entsprechenden ersten Zahnrad der Vielzahl von ersten Zahnrädern (236A..C) in Eingriff steht und durch dieses angetrieben wird, wobei jedes dritte Zahnrad (244A..C) der Vielzahl von dritten Zahnrädern (244A..C) selektiv drehfest mit der Vorgelegewelle (242) verbunden ist, um die Vorgelegewelle (242) anzutreiben; und
ferner umfassend eine Schaltanordnung (250) zum selektiven drehfesten erbinden eines beliebigen dritten Zahnrads (244A..C) der Vielzahl von dritten Zahnrädern (244A..C) mit der Vorgelegewelle (242).

12. Antriebsstrang nach Anspruch 11, wobei:
die Schaltanordnung (248) eine erste Schaltanordnung (248) ist;
das mindestens eine zweite Zahnrad (262) eine Vielzahl von zweiten Zahnrädern (262A...C) ist, die relativ zur Ausgangswelle (114) drehfest verbunden sind;
das mindestens eine vierte Zahnrad (246A...C) eine Vielzahl von vierten Zahnrädern (246A...C) ist, wobei jedes der Vielzahl von zweiten Zahnrädern (262A...C) mit einem entsprechenden vierten Zahnrad (246A...C) der Vielzahl von vierten Zahnrädern (246A...C) in Eingriff steht und durch dieses angetrieben wird, wobei jedes vierte Zahnrad (246A...C) der Vielzahl von vierten Zahnrädern selektiv drehfest mit der Vorgelegewelle (242) verbunden ist, um die Ausgangswelle (114) anzutreiben; und
ferner umfassend eine zweite Schaltanordnung (248) zum selektiven drehfesten Verbinden eines beliebigen vierten Zahnrads (246A...C) der Vielzahl von vierten Zahnrädern (246A...C) mit der Vorgelegewelle (242).

13. Antriebsstrang nach Anspruch 10, wobei:
das mindestens eine zweite Zahnrad (262) eine Vielzahl von zweiten Zahnrädern (262A...C) ist, die relativ zur Ausgangswelle (114) drehfest verbunden sind;
das mindestens eine vierte Zahnrad (246) eine Vielzahl von vierten Zahnrädern (246A...C) ist, wobei jedes der Vielzahl von zweiten Zahnrädern (262A...C) mit einem entsprechenden vierten Zahnrad (246A...C) der Vielzahl von vierten Zahnrädern (246A...C) in Eingriff steht und durch dieses angetrieben wird, wobei jedes vierte Zahnrad (246A...C) der Vielzahl von vierten Zahnrädern (246A...C) selektiv drehfest mit der Vorgelegewelle (242) verbunden ist, um die Ausgangswelle (114) anzutreiben; und
ferner umfassend eine Schaltanordnung (248) zum selektiven drehfesten Verbinden eines beliebigen vierten Zahnrads (246A...C) der Vielzahl von vierten Zahnrädern (246A...C) mit der Vorgelegewelle (242).

14. Elektrofahrrad, umfassend:
einen Rahmen (12);
einen Lenker (26), der mit dem Rahmen (12) wirkverbunden ist;
ein Vorderrad (38), das mit dem Lenker (26) wirkverbunden ist;
ein Hinterrad (62), das mit dem Rahmen (12) wirkverbunden ist;
ein Abtriebskettenrad (118), das mit dem Hinterrad (62) verbunden ist, um das Hinterrad (62) anzutreiben;
den Antriebsstrang (100) nach einem der Ansprüche 1 bis 13, das mit dem Rahmen (12) wirkverbunden ist;
ein flexibles Antriebselement (120), das mit dem Antriebs- und dem Abtriebskettenrad (116) in Eingriff steht;
ein Paar Kurbelarme (110), die mit der Kurbelwelle (108) verbunden sind; und
einen Akkusatz (130), der mit dem Rahmen (12) verbunden und elektrisch mit dem Elektromotor (104) verbunden ist.

15. Elektrofahrrad nach Anspruch 14, wobei das Elektrofahrrad ein Pedelec (10) ist; und
ferner umfassend einen mit der Lenkstange (26) verbundenen Schalthebel (32), wobei die Schaltanordnung (248) als Reaktion auf die Betätigung des Schalthebels (32) gesteuert wird.

## Revendications

1. Groupe motopropulseur (100) pour une bicyclette électrique comprenant :
un moteur électrique (104) ;
un engrenage moteur (226) relié de manière fonctionnelle au moteur électrique (104) et entraîné par celui-ci ;
un vilebrequin (108) adapté pour être relié aux manivelles (110) de la bicyclette ;
un arbre d'entrée (232) ayant une première partie d'extrémité et une seconde partie d'extrémité, la seconde partie d'extrémité étant reliée de manière fonctionnelle au vilebrequin (108) et entraînée par celui-ci ;
un engrenage d'entrée (234) relié à la première partie d'extrémité de l'arbre d'entrée, l'engrenage d'entrée venant en prise avec l'engrenage moteur (226) et étant entraîné par celui-ci, l'engrenage d'entrée entraînant l'arbre d'entrée ;
au moins un premier engrenage (236) monté sur l'arbre d'entrée ;
un arbre de sortie (114) disposé parallèlement à l'arbre d'entrée ;
au moins un deuxième engrenage (262) monté sur l'arbre de sortie, l'au moins un deuxième engrenage étant entraîné par l'au moins un premier engrenage (236) ;
un pignon d'entraînement (116) relié à l'arbre de sortie et entraîné par celui-ci ; et
un capteur de couple (156) disposé entre la seconde partie d'extrémité de l'arbre d'entrée et l'au moins un premier engrenage dans une direction définie par un axe central de l'arbre d'entrée pour détecter un couple appliqué à l'arbre d'entrée,
le moteur électrique étant contrôlé au moins en partie en fonction du couple détecté par le capteur de couple.

2. Groupe motopropulseur (100) selon la revendication 1, dans lequel :
l'arbre d'entrée (232) comporte une partie circonférentiellement évidée (334) ; et
le capteur de couple (156) est aligné avec la partie évidée (334).

3. Groupe motopropulseur selon la revendication 1, dans lequel le capteur de couple (156) est une jauge de contrainte sans contact.

4. Groupe motopropulseur selon la revendication 1, dans lequel le vilebrequin (108) s'étend à travers l'arbre d'entrée (232).

5. Groupe motopropulseur selon la revendication 4, comprenant en outre un embrayage (324) reliant le vilebrequin (108) à l'arbre d'entrée (232), le capteur de couple (156) étant disposé entre l'embrayage (324) et l'au moins un premier engrenage (236) dans la direction définie par l'axe central (252).

6. Groupe motopropulseur selon la revendication 5, comprenant en outre un palier (272) relié en rotation entre l'arbre d'entrée (232) et le vilebrequin (108), le capteur de couple (156) étant disposé entre l'embrayage (324) et le palier (272) dans la direction définie par l'axe central (252).

7. Groupe motopropulseur selon la revendication 5, dans lequel l'embrayage (324) est un deuxième embrayage (324); et
comprenant en outre un premier embrayage (328) reliant l'engrenage d'entrée (234) à l'arbre d'entrée (232).

8. Groupe motopropulseur selon la revendication 7, dans lequel le premier embrayage (328) est un embrayage à roue libre.

9. Groupe motopropulseur selon la revendication 7, dans lequel :
le premier embrayage (328) est disposé au niveau de la première extrémité de l'arbre d'entrée (232); et
le deuxième embrayage (324) est disposé au niveau de la seconde extrémité de l'arbre d'entrée (232).

10. Groupe motopropulseur selon la revendication 1, comprenant en outre :
un arbre intermédiaire (242) disposé parallèlement à l'arbre d'entrée (232);
au moins un troisième engrenage (242) monté sur l'arbre intermédiaire (242), l'au moins un troisième engrenage (244) venant en prise avec l'au moins un premier engrenage (236) et étant entraîné par celui-ci ;
au moins un quatrième engrenage (246) monté sur l'arbre intermédiaire (242), l'au moins un deuxième engrenage (262) venant en prise avec l'au moins un quatrième engrenage (246) et étant entraîné par celui-ci.

11. Groupe motopropulseur selon la revendication 10, dans lequel :
l'au moins un premier engrenage (236) est une pluralité de premiers engrenages (236A..C) fixés en rotation par rapport à l'arbre d'entrée (232);
l'au moins un troisième engrenage (242) est une pluralité de troisièmes engrenages (244A...C), chacun de la pluralité de troisièmes engrenages (232) venant en prise avec un premier engrenage (236) correspondant de la pluralité de premiers engrenages (236A..C) et étant entraîné par celui-ci, chaque troisième engrenage (244A...C) de la pluralité de troisièmes engrenages (244A...C) étant fixé de manière sélective en rotation à l'arbre intermédiaire (242) pour entraîner l'arbre intermédiaire (242); et
comprenant en outre un ensemble de changement de vitesse (250) pour fixer de manière sélective en rotation un troisième engrenage (244A...C) quelconque de la pluralité de troisièmes engrenages (244A...C) à l'arbre intermédiaire (242).

12. Groupe motopropulseur selon la revendication 11, dans lequel :
l'ensemble de changement de vitesse (248) est un premier ensemble de changement de vitesse (248);
l'au moins un deuxième engrenage (262) est une pluralité de deuxièmes engrenages (262A..C) fixés en rotation par rapport à l'arbre de sortie (114);
l'au moins un quatrième engrenage (246A..C) est une pluralité de quatrièmes engrenages (246A..C), chacun de la pluralité de deuxièmes engrenages (262A..C) venant en prise avec un quatrième engrenage (246A..C) correspondant de la pluralité de quatrièmes engrenages (246A..C) et étant entraîné par celui-ci, chaque quatrième engrenage (246A..C) de la pluralité de quatrièmes engrenages (246A..C) étant fixé de manière sélective en rotation à l'arbre intermédiaire (242) pour entraîner l'arbre de sortie (114); et
comprenant en outre un second ensemble de changement de vitesse (250) pour fixer de manière sélective en rotation un quatrième engrenage (246A..C) quelconque de la pluralité de quatrièmes engrenages (246A..C) à l'arbre intermédiaire (242).

13. Groupe motopropulseur selon la revendication 10, dans lequel :
l'au moins un deuxième engrenage (262) est une pluralité de deuxièmes engrenages (262A..C) fixés en rotation par rapport à l'arbre de sortie (114);
l'au moins un quatrième engrenage (246) est une pluralité de quatrièmes engrenages (246A..C), chacun de la pluralité de deuxièmes engrenages (262A..C) venant en prise avec un quatrième engrenage (246A..C) correspondant de la pluralité de quatrièmes engrenages (246A..C) et étant entraîné par celui-ci, chaque quatrième engrenage (246A..C) de la pluralité de quatrièmes engrenages (246A..C) étant fixé de manière sélective en rotation à l'arbre intermédiaire (242) pour entraîner l'arbre de sortie (114); et
comprenant en outre un ensemble de changement de vitesse (248) pour fixer de manière sélective en rotation un quatrième engrenage (246A..C) quelconque de la pluralité de quatrièmes engrenages (246A..C) à l'arbre intermédiaire (242).

14. Bicyclette électrique comprenant :
un châssis (12) ;
un guidon (26) relié de manière fonctionnelle au châssis (12);
une roue avant (38) reliée de manière fonctionnelle au guidon (26);
une roue arrière (62) reliée de manière fonctionnelle au châssis (12);
un pignon entraîné (118) relié à la roue arrière (62) pour entraîner la roue arrière (62);
le groupe motopropulseur (100) selon l'une quelconque des revendications 1 à 13 relié de manière fonctionnelle au châssis (12);
un élément d'entraînement flexible (120) venant en prise avec les pignons d'entraînement et entraînés (116);
une paire de manivelles (110) reliées au vilebrequin (108); et
un bloc-batterie (130) relié au châssis (12) et connecté électriquement au moteur électrique (104).

15. Bicyclette électrique selon la revendication 14, dans laquelle la bicyclette électrique est une BAE (10); et
comprenant en outre un levier de vitesses (32) relié au guidon (26), l'ensemble de changement de vitesses (248) étant commandé en réponse à l'actionnement du levier de vitesses (32).
